# EUROPEAN PATENT APPLICATION

(11) **EP 4 697 661 A1**
(43) Date of publication of application: **18.02.2026**
(21) Application number: 24822658.1
(22) Date of filing: 07.06.2024
(51) Int. Cl.: H04L 27/26

(54) **METHOD FOR TRANSMITTING PHYSICAL LAYER PROTOCOL DATA UNIT, AND COMMUNICATION APPARATUS**

(30) Priority: 12.06.2023 CN 202310695899
(71) Applicant: Huawei Technologies Co., Ltd., Shenzhen, Guangdong 518129 (CN)
(72) Inventor: HU, Mengshi, Shenzhen, Guangdong 518129 (CN); GAN, Ming, Shenzhen, Guangdong 518129 (CN); GONG, Bo, Shenzhen, Guangdong 518129 (CN); YU, Jian, Shenzhen, Guangdong 518129 (CN)
(74) Representative: Gill Jennings & Every LLP
(86) International application number: PCT/CN2024/098072
(87) International publication number: WO 2024/255708

(57) **Abstract**

This application relates to a method for transmitting a physical layer protocol data unit and a communication apparatus. According to this application, a first device generates a PPDU. The PPDU includes first information carried in a first subcarrier set. The first information includes data information and pilot information. The first subcarrier set includes at least one first RU and/or at least one first MRU. The data information is carried on a data subcarrier corresponding to the at least one first RU and/or a data subcarrier corresponding to at least one MRU. The pilot information includes first pilot information carried on a first pilot subcarrier corresponding to the at least one first RU and/or a first pilot subcarrier corresponding to the at least one MRU. This helps increase a number of pilot subcarriers.

## Description

This application claims priority to Chinese Patent Application No. 202310695899.2, filed with the China National Intellectual Property Administration on June 12, 2023 and entitled "METHOD FOR TRANSMITTING PHYSICAL LAYER PROTOCOL DATA UNIT AND COMMUNICATION APPARATUS", which is incorporated herein by reference in its entirety.

### TECHNICAL FIELD

Embodiments of this application relate to the communication field, and more specifically, to a method for transmitting a physical layer protocol data unit and a communication apparatus.

### BACKGROUND

A wireless local area network (wireless local area network, WLAN) has been developed for many generations to date, including low-frequency communication standards running below 7 GHz, such as 802.11a/b/g, 802.11n, 802.11ac, 802.11ax, and 802.11be, and further including high-frequency communication standards, such as 802.11ad and 802.11ay running near 60 GHz.

Both low-frequency communication and high-frequency communication of the WLAN support transmission in an orthogonal frequency division multiplexing (orthogonal frequency division multiplexing, OFDM) format. When transmission in the OFDM format is performed, how to reduce adverse impact of a carrier frequency offset and/or phase noise on communication quality becomes an urgent problem to be resolved.

### SUMMARY

Embodiments of this application provide a method for transmitting a physical layer protocol data unit and a communication apparatus, to increase a number of pilot subcarriers, thereby helping reduce adverse impact of a carrier frequency offset and/or phase noise on communication quality.

According to a first aspect, a method for transmitting a physical layer protocol data unit is provided. The method may be performed by a first device, or may be performed by a component (for example, a chip or a circuit) of a first device. This is not limited.

The method includes: A first device generates a physical layer protocol data unit (PHY protocol data unit, PPDU). The PPDU includes first information carried in a first subcarrier set, the first information includes data information and pilot information, the first subcarrier set includes at least one first resource unit (resource unit, RU) and/or at least one first multi-resource unit (multi-resource unit MRU), the data information is carried on a data subcarrier corresponding to the at least one first RU and/or a data subcarrier corresponding to the at least one first MRU, and the pilot information includes first pilot information carried on a first pilot subcarrier corresponding to the at least one first RU and/or a first pilot subcarrier corresponding to the at least one first MRU. The first device sends the PPDU.

In this embodiment of this application, the first subcarrier set may include the at least one first RU and/or the at least one first MRU. This helps increase a number of pilot subcarriers included in the first subcarrier set, helps improve accuracy of estimating a carrier frequency offset and/or phase noise by a receiving device based on a pilot value carried on a pilot subcarrier included in the first subcarrier set, and further helps reduce impact of the carrier frequency offset and/or the phase noise on communication quality.

With reference to the first aspect, in some implementations of the first aspect, an index corresponding to the first pilot subcarrier is {-116, -90, -48, -22, 22, 48, 90, 116} or {-116, -90, -48, -22, -10, 10, 22, 48, 90, 116}.

For example, a subcarrier index range corresponding to the first subcarrier set is the same as a subcarrier index range corresponding to one RU or one MRU. For example, a subcarrier index range corresponding to the first subcarrier set is the same as a subcarrier index range corresponding to a 242-tone RU. When the at least one first RU and/or the at least one first MRU include/includes two 106-tone RUs and one 26-tone RU, the first subcarrier set may include 10 first pilot subcarriers, and has two more first pilot subcarriers than the 242-tone RU.

It should be understood that the first pilot subcarrier is a pilot subcarrier included in an RU or an MRU defined in an existing protocol or standard.

It should be noted that the RU or the MRU in embodiments of this application may be an RU or an MRU defined in an existing protocol or standard or an RU or an MRU defined in a future protocol or standard. For example, the RU may be a 26-tone RU, a 52-tone RU, a 106-tone RU, or a 242-tone RU. The MRU may be a 52+26-tone MRU, a 106+26-tone MRU, or a 484+242-tone MRU.

For example, a number of subcarriers included in each first RU or first MRU in the at least one first RU and/or the at least one first MRU is less than a number of subcarriers included in the first subcarrier set. For example, the first subcarrier set includes 242 subcarriers. In this case, the first RU or the first MRU included in the first subcarrier set may be one or more of the following: a 26-tone RU, a 52-tone RU, a 106-tone RU, a 26+52-tone MRU, or a 106+26-tone MRU.

The following uses an example in which the subcarrier index range corresponding to the first subcarrier set is the same as the subcarrier index range corresponding to the 242-tone RU to describe a possible form of the at least one first RU and/or the at least one first MRU included in the first subcarrier set.

For example, the at least one first RU and/or the at least one first MRU include/includes two 106-tone RUs; or the at least one first RU and/or the at least one first MRU include/includes two 106-tone RUs and one 26-tone RU; or the at least one first RU and/or the at least one first MRU include/includes a 106+26-tone MRU and one 106-tone RU; or the at least one first RU and/or the at least one first MRU include/includes four 52-tone RUs and one 26-tone RU.

When a bandwidth corresponding to the PPDU is 20 MHz, and the at least one first RU and/or the at least one first MRU include/includes two 106-tone RUs, subcarrier index ranges corresponding to the two 106-tone RUs included in the at least one first RU and/or the at least one first MRU are [-122: -17] and [17: 122] respectively, and pilot subcarrier indexes corresponding to the two 106-tone RUs included in the at least one first RU and/or the at least one first MRU are {-116, -90, -48, -22} and {22, 48, 90, 116} respectively. [a: b] represents index values of subcarriers starting from a, ending at b, and including a and b, with an increment of 1.

When a bandwidth corresponding to the PPDU is 20 MHz, and the at least one first RU and/or the at least one first MRU include/includes two 106-tone RUs and one 26-tone RU, subcarrier index ranges corresponding to the two 106-tone RUs and the 26-tone RU that are included in the at least one first RU and/or the at least one first MRU are [-122: -17], [17: 122], and [-16: -4, 4: 16] respectively, and pilot subcarrier indexes corresponding to the two 106-tone RUs and the 26-tone RU that are included in the at least one first RU and/or the at least one first MRU are {-116, -90, -48, -22}, {22, 48, 90, 116}, and {-10, 10} respectively.

With reference to the first aspect, in some implementations of the first aspect, the first subcarrier set includes Y subcarriers, and the at least one first RU and/or the at least one first MRU include/includes L data subcarriers and K first pilot subcarriers, where Y, L, and K are all positive integers, and Y>L+K.

According to the foregoing technical solution, the number of subcarriers included in the first subcarrier set is greater than a number of subcarriers included in the at least one first RU and/or the at least one first MRU. This helps increase the number of pilot subcarriers included in the first subcarrier set. For example, one or more subcarriers, other than a subcarrier included in the at least one first RU and/or a subcarrier included in the at least one first MRU, in the Y subcarriers included in the first subcarrier set may be used as a pilot subcarrier.

With reference to the first aspect, in some implementations of the first aspect, the pilot information further includes second pilot information carried on M second pilot subcarriers, and the M second pilot subcarriers belong to a subcarrier other than the L data subcarriers and the K first pilot subcarriers in the Y subcarriers, where M is a positive integer.

It should be understood that the M second pilot subcarriers are different from the K first pilot subcarriers. The M second pilot subcarriers are a subcarrier other than a subcarrier included in an RU or an MRU in an existing protocol. In other words, M subcarriers, other than the subcarrier included in the at least one first RU and/or the subcarrier included in the at least one first MRU, in the Y subcarriers included in the first subcarrier set may be used as a second pilot subcarrier.

According to the foregoing technical solution, because the number of subcarriers included in the first subcarrier set is greater than the number of subcarriers included in the at least one first RU and/or the at least one first MRU, the M subcarriers, other than the subcarrier included in the at least one first RU and/or the subcarrier included in the at least one first MRU, in the Y subcarriers included in the first subcarrier set may be used as the second pilot subcarrier. This can further increase the number of pilot subcarriers included in the first subcarrier set.

With reference to the first aspect, in some implementations of the first aspect, the pilot information further includes third pilot information carried on T third pilot subcarriers, and the T third pilot subcarriers are in a subcarrier set corresponding to a bandwidth corresponding to the PPDU and are different from the Y subcarriers, where T is a positive integer.

It should be understood that the T third pilot subcarriers are different from the K first pilot subcarriers and the M second pilot subcarriers. The T third pilot subcarriers are a subcarrier other than the first subcarrier set. In other words, T subcarriers, other than a subcarrier included in the first subcarrier set, in the subcarrier set corresponding to the bandwidth corresponding to the PPDU may be used as a third pilot subcarrier.

According to the foregoing technical solution, T subcarriers in subcarriers, other than the Y subcarriers included in the first subcarrier set, in the subcarrier set corresponding to the bandwidth corresponding to the PPDU are used as a third pilot subcarrier. This can further increase a number of pilot subcarriers included in the bandwidth corresponding to the PPDU.

With reference to the first aspect, in some implementations of the first aspect, the method further includes: The first device naps, via a general bit-to-constellation point generation module, X bits corresponding to the data information to the data subcarrier corresponding to the at least one first RU and/or the data subcarrier corresponding to the at least one first MRU, where X is a positive integer.

It should be understood that the first device may generate L constellation points via the general bit-to-constellation point generation module based on the input X bits, and one-to-one map the L constellation points to L data subcarriers in the at least one first RU and/or the at least one first MRU.

With reference to the first aspect, in some implementations of the first aspect, the PPDU includes at least one physical layer service data unit (PHY service data unit, PSDU), and the at least one PSDU one-to-one corresponds to the at least one first RU and/or the at least one first MRU.

According to the foregoing technical solution, for each PSDU in the at least one PSDU, the first device may reuse an existing RU generation module to map a data bit included in the PSDU to a data subcarrier in a first RU corresponding to the PSDU, or reuse an existing MRU generation module to map a data bit included in the PSDU to a data subcarrier in a first MRU corresponding to the PSDU.

With reference to the first aspect, in some implementations of the first aspect, the method further includes: The first device allocates X bits corresponding to the data information to the at least one first RU and/or the at least one first MRU. Different bits in the X bits are allocated to different first RUs or first MRUs in the at least one first RU and/or the at least one first MRU, where X is a positive integer.

According to the foregoing technical solution, after allocating the X bits to the at least one first RU and/or the at least one first MRU, the first device may reuse the existing RU generation module to map a bit allocated to the first RU to a data subcarrier in the first RU, and/or reuse the existing MRU generation module to map a bit allocated to the first MRU to a data subcarrier in the first MRU.

For example, that the first device allocates the X bits corresponding to the first data to the at least one first RU and/or the at least one first MRU includes: The first device allocates the X bits to the at least one first RU and/or the at least one first MRU in N rounds of allocation processes. In an n^{th} round of allocation process, the first device first allocates, in a predefined order, at least one bit in the X bits to a first RU or a first MRU that is ranked ahead in the at least one first RU and/or the at least one first MRU, and then allocates at least one bit in the X bits to a first RU or a first MRU that is ranked behind in the at least one first RU and/or the at least one first MRU, where N is a positive integer, and n=1, 2, ..., or N.

For example, if N>1, in different rounds of allocation processes in the N rounds of allocation processes, numbers of bits allocated by the first device to a same first RU or a same first MRU are the same or different.

For example, the predefined order is any one of the following: a descending order of numbers of subcarriers included in the first RU or the first MRU; or an ascending order of numbers of subcarriers included in the first RU or the first MRU; or a descending order of frequencies of the first RU or the first MRU; or an ascending order of frequencies of the first RU or the first MRU.

With reference to the first aspect, in some implementations of the first aspect, a pilot sequence corresponding to a pilot subcarrier included in the first subcarrier set is obtained by performing a first operation on a pilot sequence corresponding to at least one second RU and/or a pilot sequence corresponding to at least one second MRU, and the first operation includes one or more of the following: splicing, bit flipping, cyclic shift, or exclusion.

It should be understood that each of the first RU and the second RU that are mentioned in embodiments of this application may be an RU defined in an existing protocol or standard. Because the first RU and the second RU may not be a same RU, "first" and "second" are used to distinguish in embodiments of this application. Similarly, each of the first MRU and the second MRU is an MRU defined in an existing protocol or standard. Because the first MRU and the second MRU may not be a same MRU, "first" and "second" are used to distinguish in embodiments of this application.

According to the foregoing technical solutions, if the number of pilot subcarriers included in the first subcarrier set is different from a number of pilot subcarriers included in an RU or an MRU defined in an existing protocol, the first operation may be performed on the pilot sequence corresponding to the at least one second RU and/or the pilot sequence corresponding to the at least one second MRU to obtain the pilot sequence corresponding to the pilot subcarrier included in the first subcarrier set.

With reference to the first aspect, in some implementations of the first aspect, a pilot sequence corresponding to a pilot subcarrier included in the bandwidth corresponding to the PPDU is obtained by performing a first operation on a pilot sequence corresponding to at least one second RU and/or a pilot sequence corresponding to at least one second MRU, and the first operation includes one or more of the following: splicing, bit flipping, cyclic shift, or exclusion.

According to the foregoing technical solution, if the number of pilot subcarriers included in the bandwidth corresponding to the PPDU is different from a number of pilot subcarriers included in an RU or an MRU defined in an existing protocol, the first operation may be performed on the pilot sequence corresponding to the at least one second RU and/or the pilot sequence corresponding to the at least one second MRU to obtain the pilot sequence corresponding to the pilot subcarrier included in the first subcarrier set.

With reference to the first aspect, in some implementations of the first aspect, the PPDU further includes first indication information, and the first indication information is used to determine that the first subcarrier set includes the at least one first RU and/or the at least one first MRU.

According to the foregoing technical solution, if the first subcarrier set may include the at least one first RU and/or the at least one first MRU, or may not include the at least one first RU and/or the at least one first MRU, when the PPDU includes the first indication information, the second device can determine, based on the first indication information, whether the first subcarrier set includes the at least one first RU and/or the at least one first MRU.

With reference to the first aspect, in some implementations of the first aspect, the PPDU further includes second indication information, and the second indication information is used to determine the at least one first RU and/or the at least one first MRU.

According to the foregoing technical solution, if the at least one first RU and/or the at least one first MRU included in the first subcarrier set have/has a plurality of possible forms, when the PPDU includes the second indication information, the second device can determine the at least one first RU and/or the at least one first MRU based on the second indication information.

According to a second aspect, a method for transmitting a physical layer protocol data unit is provided. The method may be performed by a second device, or may be performed by a component (for example, a chip or a circuit) of a second device. This is not limited.

The method includes: A second device receives a PPDU from a first device. The PPDU includes first information carried in a first subcarrier set. The first information includes data information and pilot information. The first subcarrier set includes at least one first RU and/or at least one first MRU. The data information is carried on a data subcarrier corresponding to the at least one first RU and/or a data subcarrier corresponding to the at least one first MRU. The pilot information includes first pilot information carried on a first pilot subcarrier corresponding to the at least one first RU and/or a first pilot subcarrier corresponding to the at least one first MRU. The second device parses the PPDU.

For beneficial effect of the second aspect and the implementations of the second aspect, refer to the descriptions of the first aspect.

With reference to the second aspect, in some implementations of the second aspect, an index corresponding to the first pilot subcarrier is {-116, -90, -48, -22, 22, 48, 90, 116} or {-116, -90, -48, -22, -10, 10, 22, 48, 90, 116}.

With reference to the second aspect, in some implementations of the second aspect, the first subcarrier set includes Y subcarriers, and the at least one first RU and/or the at least one first MRU include/includes L data subcarriers and K first pilot subcarriers, where Y, L, and K are all positive integers, and Y>L+K.

With reference to the second aspect, in some implementations of the second aspect, the pilot information further includes second pilot information carried on M second pilot subcarriers, and the M second pilot subcarriers belong to a subcarrier other than the L data subcarriers and the K first pilot subcarriers in the Y subcarriers, where M is a positive integer.

With reference to the second aspect, in some implementations of the second aspect, the pilot information further includes third pilot information carried on T third pilot subcarriers, and the T third pilot subcarriers are in a subcarrier set corresponding to a bandwidth corresponding to the PPDU and are different from the Y subcarriers, where T is a positive integer.

With reference to the second aspect, in some implementations of the second aspect, a subcarrier index range corresponding to the first subcarrier set is the same as a subcarrier index range corresponding to a 242-tone RU. The at least one first RU and/or the at least one first MRU include/includes two 106-tone RUs; or the at least one first RU and/or the at least one first MRU include/includes two 106-tone RUs and one 26-tone RU; or the at least one first RU and/or the at least one first MRU include/includes a 106+26-tone MRU and one 106-tone RU; or the at least one first RU and/or the at least one first MRU include/includes four 52-tone RUs and one 26-tone RU.

With reference to the second aspect, in some implementations of the second aspect, subcarrier index ranges corresponding to the two 106-tone RUs included in the at least one first RU and/or the at least one first MRU are [-122: -17] and [17: 122] respectively, and pilot subcarrier indexes corresponding to the two 106-tone RUs included in the at least one first RU and/or the at least one first MRU are {-116, -90, -48, -22} and {22, 48, 90, 116} respectively. Alternatively, subcarrier index ranges corresponding to the two 106-tone RUs and the 26-tone RU that are included in the at least one first RU and/or the at least one first MRU are [-122: -17], [17: 122], and [-16: -4, 4: 16] respectively, and pilot subcarrier indexes corresponding to the two 106-tone RUs and the 26-tone RU that are included in the at least one first RU and/or the at least one first MRU are {-116, -90, -48, -22}, {22, 48, 90, 116}, and {-10, 10} respectively. [a: b] [a: b] represents index values of subcarriers starting from a, ending at b, and including a and b, with an increment of 1.

With reference to the second aspect, in some implementations of the second aspect, the PPDU includes at least one PSDU, and the at least one PSDU one-to-one corresponds to the at least one first RU and/or the at least one first MRU.

With reference to the second aspect, in some implementations of the second aspect, that the second device parses the PPDU includes: The second device combines a bit corresponding to the at least one first RU and/or a bit corresponding to the at least one first MRU into X bits corresponding to the data information, where X is a positive integer.

With reference to the second aspect, in some implementations of the second aspect, that the second device combines the bit corresponding to the at least one first RU and/or the bit corresponding to the at least one first MRU into the X bits corresponding to the data information includes: The second device combines the bit corresponding to the at least one first RU and/or the bit corresponding to the at least one first MRU into the X bits in N rounds of ranking processes. In an n^{th} round of ranking process, the second device first extracts, in a predefined order, at least one bit from a bit corresponding to a first RU or a first MRU that is ranked ahead in the at least one first RU and/or the at least one first MRU to rank the at least one bit ahead, and then extracts at least one bit from a bit corresponding to a first RU or a first MRU that is ranked behind in the at least one first RU and/or the at least one first MRU to rank the at least one bit behind, where N is a positive integer, and n=1, 2, ..., or N.

With reference to the second aspect, in some implementations of the second aspect, N>1, and in different rounds of ranking processes in the N rounds of ranking processes, numbers of bits extracted by the second device from a bit corresponding to a same first RU or a same first MRU are the same or different.

With reference to the second aspect, in some implementations of the second aspect, the predefined order is any one of the following: a descending order of numbers of subcarriers included in the first RU or the first MRU; or an ascending order of numbers of subcarriers included in the first RU or the first MRU; or a descending order of frequencies of the first RU or the first MRU; or an ascending order of frequencies of the first RU or the first MRU.

With reference to the second aspect, in some implementations of the second aspect, a pilot sequence corresponding to a pilot subcarrier included in the first subcarrier set is obtained by performing a first operation on a pilot sequence corresponding to at least one second RU and/or a pilot sequence corresponding to at least one second MRU, and the first operation includes one or more of the following: splicing, bit flipping, cyclic shift, or exclusion.

With reference to the second aspect, in some implementations of the second aspect, a pilot sequence corresponding to a pilot subcarrier included in the bandwidth corresponding to the PPDU is obtained by performing a first operation on a pilot sequence corresponding to at least one second RU and/or a pilot sequence corresponding to at least one MRU, and the first operation includes one or more of the following: splicing, bit flipping, cyclic shift, or exclusion.

With reference to the second aspect, in some implementations of the second aspect, the PPDU further includes first indication information. The method further includes: The second device determines, based on the first indication information, that the first subcarrier set includes the at least one first RU and/or the at least one first MRU.

With reference to the second aspect, in some implementations of the second aspect, the PPDU further includes second indication information. The method further includes: The second device determines the at least one first RU and/or the at least one first MRU based on the second indication information.

According to a third aspect, a communication apparatus is provided. The communication apparatus is configured to perform the method according to either the first aspect or the second aspect. Specifically, the communication apparatus may include units and/or modules configured to perform the method in any one of the first aspect or the implementations of the first aspect, or include units and/or modules configured to perform the method in any one of the second aspect or the implementations of the second aspect, for example, a processing unit and/or a transceiver unit.

In an implementation, the communication apparatus is a device (for example, a first device or a second device). When the communication apparatus is the device, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit used in a device (for example, a first device or a second device). When the communication apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fourth aspect, a communication apparatus is provided. The apparatus includes: a memory, configured to store a program; and at least one processor, configured to execute a computer program or instructions stored in the memory, to perform the method in any one of the first aspect or the implementations of the first aspect or perform the method in any one of the second aspect or the implementations of the second aspect.

In an implementation, the communication apparatus is a device (for example, a first device or a second device).

In another implementation, the apparatus is a chip, a chip system, or a circuit used in a device (for example, a first device or a second device).

According to a fifth aspect, this application provides a processor, configured to perform the method in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable storage medium stores program code to be executed by a device, and the program code includes instructions for performing the method in any one of the first aspect or the implementations of the first aspect, or includes instructions for performing the method in any one of the second aspect or the implementations of the second aspect.

According to a seventh aspect, a computer program product including instructions is provided. When the computer program product runs on a computer, the computer performs the method in any one of the first aspect or the implementations of the first aspect, or the computer performs the method in any one of the second aspect or the implementations of the second aspect.

According to an eighth aspect, a chip is provided. The chip includes a processor and an input/output interface. The processor reads, through the input/output interface, instructions stored in a memory, to perform the method according to any one of the first aspect or the implementations of the first aspect, or perform the method according to any one of the second aspect or the implementations of the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method in any one of the first aspect or the implementations of the first aspect or perform the method in any one of the second aspect or the implementations of the second aspect.

According to a ninth aspect, a communication system is provided, including the foregoing first device and second device.

### BRIEF DESCRIPTION OF DRAWINGS

FIG. 1 is a diagram of an application scenario to which an embodiment of this application is applicable;
FIG. 2 is a diagram of a structure of a communication apparatus according to an embodiment of this application;
FIG. 3 is a diagram of a tone plan and RU distribution in a 20 MHz bandwidth;
FIG. 4 is a diagram of a tone plan and RU distribution in a 40 MHz bandwidth;
FIG. 5 is a diagram of a tone plan and RU distribution in an 80 MHz bandwidth;
FIG. 6 is a schematic flowchart of a method according to an embodiment of this application;
FIG. 7 is a diagram of at least one first RU and/or at least one first MRU that are/is included in a first subcarrier set;
FIG. 8 is a diagram of distribution of subcarriers included in a first subcarrier set;
FIG. 9 is a diagram of a transmitter module;
FIG. 10 is a diagram of a correspondence between a PSDU and at least one first RU and/or at least one first MRU;
FIG. 11 is a diagram in which an RU parser allocates a data bit to at least one first RU and/or at least one first MRU;
FIG. 12 is a diagram of a communication apparatus according to an embodiment of this application;
FIG. 13 is a diagram of another communication apparatus according to an embodiment of this application; and
FIG. 14 is a diagram of a chip system according to an embodiment of this application.

### DESCRIPTION OF EMBODIMENTS

The following describes technical solutions of this application with reference to accompanying drawings.

The technical solutions provided in embodiments of this application are applicable to a wireless local area network (wireless local area network, WLAN) scenario, for example, support related institute of electrical and electronics engineers (institute of electrical and electronics engineers, IEEE) 802.11 standards, such as the 802.11a/b/g standard, the 802.11n standard, the 802.11ac standard, the 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be like Wi-Fi 8; may be further applied to an ultra-wideband (ultra-wideband, UWB)-based wireless personal area network system, for example, 802.15 series standards; and may be further applied to a sensing (sensing) system, for example, 802.11bf series standards. The 802.11n standard is referred to as high throughput (high throughput, HT), the 802.11ac standard is referred to as a very high throughput (very high throughput, VHT) standard, the 802.11ax standard is referred to as a high efficient (high efficient, HE) standard, and the 802.11be standard is referred to as an extremely high throughput (extremely high throughput, EHT) standard. 802.11bf includes two major categories of standards: a low frequency (for example, sub-7 GHz) and a high frequency (for example, 60 GHz). Sub-7 GHz is implemented mainly based on standards such as 802.11ac, 802.11ax, 802.11be, and a next-generation standard. 60 GHz is implemented mainly based on standards such as 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of used coverage and a used wireless access protocol, the various aspects provided in embodiments of this application are applicable to any suitable wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or new radio (new radio, NR), a 6th generation (6th generation, 6G) system, an internet of things (internet of things, IoT) network, or vehicle-to-everything (vehicle-to-x, V2X).

The foregoing communication systems applicable to this application are merely examples for descriptions, and the communication systems applicable to this application are not limited thereto. This is uniformly described herein, and details are not described below again.

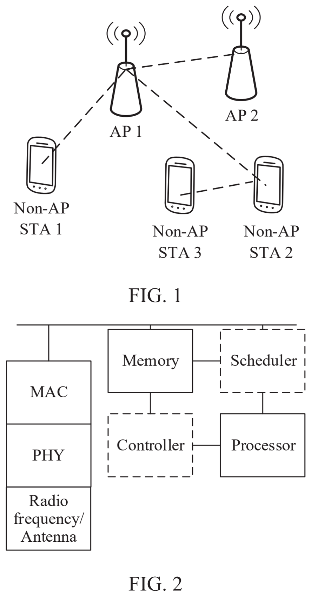

FIG. 1 is a diagram of an application scenario to which an embodiment of this application is applicable. As shown in FIG. 1, a communication method provided in this application is applicable to data communication between stations (station, STA). The station may be an access point (access point, AP) station, or may be a non-access point station (non-access point station, non-AP STA). The access point station and the non-access point station are referred to as an AP and a non-AP station for short respectively. Specifically, the solutions of this application are applicable to data communication between an AP and one or more non-AP stations (for example, data communication between an AP 1 and a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from tens of meters to more than 100-odd meters. Certainly, the access point may alternatively be deployed outdoors. The access point is equivalent to a bridge that connects the wired network and the wireless network. The access point is mainly used to connect various wireless network clients together and then connect the wireless network to an ethernet.

Specifically, the access point may be a terminal or network device with a Wi-Fi chip, or may be a terminal or network device including a chip for accessing a wired (or wireless) network. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart camera, a smart remote control, or a smart water/electricity meter in a smart home, and a sensor in a smart city.

The AP or the non-AP station may include a transmitter, a receiver, a memory, a processor, and the like. The transmitter and the receiver are configured to send and receive packet structures respectively. The memory is configured to store signaling information, store a preset value agreed in advance, and the like. The processor is configured to parse the signaling information, process related data, and the like.

For example, FIG. 2 shows an example of a communication apparatus according to this application. The apparatus shown in FIG. 2 may be an AP or a non-AP station. A medium access control (medium access control, MAC) layer processing module, a physical (physical, PHY) layer processing module, a radio frequency or an antenna, and the like are configured to implement related functions of the foregoing transmitter and receiver. As shown in FIG. 2, in addition to the MAC layer processing module, the PHY layer processing module, the radio frequency or the antenna, a memory, and a processor, the apparatus may further include a controller and a scheduler.

It should be understood that FIG. 2 shows merely an example of an apparatus provided in this application, and does not constitute a limitation on this application. For example, the apparatus may alternatively not include the controller and/or the scheduler.

For ease of understanding embodiments of this application, the following first describes several nouns or terms in this application.
1. Subcarrier: Wireless communication signals are transmitted in specific channel bandwidths. A bandwidth may be divided, by using an orthogonal frequency division multiplexing (orthogonal frequency division multiplexing, OFDM) technology, into a plurality of frequency components within a channel bandwidth at a specific frequency spacing. These components are referred to as subcarriers.
2. Tone plan (tone plan) defined based on consecutive resource units (resource unit, RU)

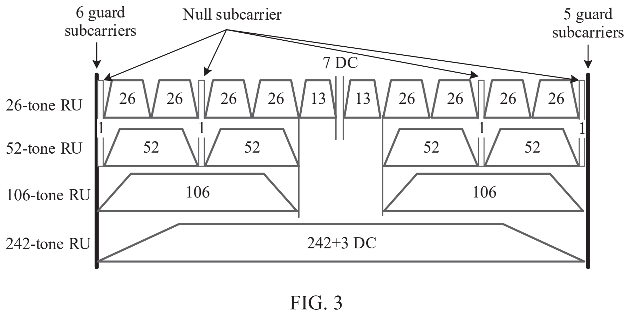

FIG. 3 is a diagram of a tone plan and RU distribution in a 20 MHz bandwidth. As shown in FIG. 3, when a bandwidth is 20 MHz, the entire bandwidth may include an entire 242-tone RU, or may include any one of or a combination of at least two of a 26-tone RU, a 52-tone RU, and a 106-tone RU. The 26-tone RU indicates that the RU includes 26 subcarriers, the 52-tone RU indicates that the RU includes 52 subcarriers, the 106-tone RU indicates that the RU includes 106 subcarriers, and the rest can be deduced by analogy. In addition to subcarriers used for data transmission, the RU further includes a pilot subcarrier. In addition to the subcarriers that form the RU, the bandwidth further includes some guard (guard) subcarriers, null subcarriers, or direct current (direct current, DC) subcarriers.

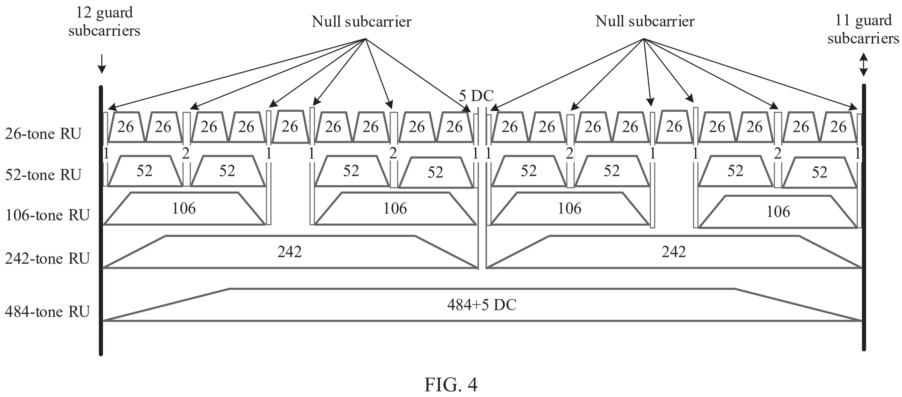

FIG. 4 is a diagram of a tone plan and RU distribution in a 40 MHz bandwidth. When a bandwidth is 40 MHz, the entire bandwidth is approximately equivalent to a replication of a tone plan of 20 MHz. The entire bandwidth may include an entire 484-tone RU, or may include any one of or a combination of at least two of a 26-tone RU, a 52-tone RU, a 106-tone RU, and a 242-tone RU.

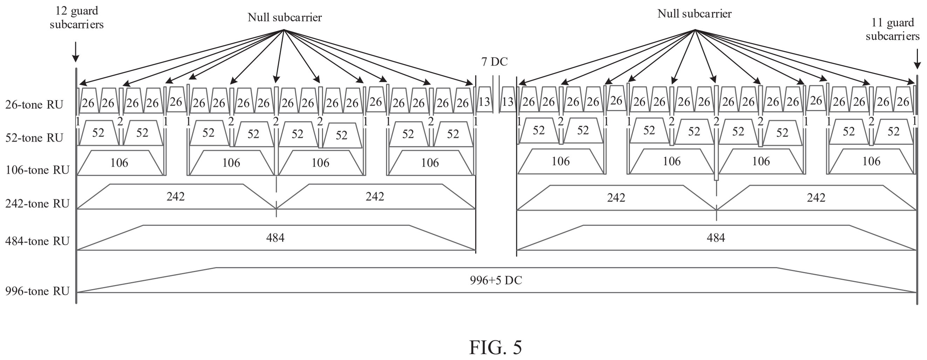

FIG. 5 is a diagram of a tone plan and RU distribution in an 80 MHz bandwidth. When a bandwidth is 80 MHz, the entire bandwidth may include four RUs in a unit of a 242-tone RU, or may include an entire 996-tone RU, or may include various combinations of a 26-tone RU, a 52-tone RU, a 106-tone RU, a 242-tone RU, and a 484-tone RU.

When a bandwidth is 160 MHz or 80 MHz+80 MHz, the entire bandwidth may be considered as two replications of a tone plan of 80 MHz. The entire bandwidth may include an entire 2*996-tone RU, or may include any one of or a combination of at least two of a 26-tone RU, a 52-tone RU, a 106-tone RU, a 242-tone RU, a 484-tone RU, and a 996-tone RU. When a bandwidth is 240 MHz or 160 MHz+80 MHz, the entire bandwidth may be considered as three replications of a tone plan of 80 MHz. When a bandwidth is 320 MHz or 160 MHz+160 MHz, the entire bandwidth may be considered as four replications of a tone plan of 80 MHz. A diagram of distribution is not separately provided herein.

The following provides subcarrier index ranges of different types of RUs in different bandwidths.

First, a 20 MHz bandwidth is used for description. Because a subcarrier spacing (namely, a subcarrier spacing defined in the finalized 802.11ax standard) in a current WLAN system is 78.125 kHz, the 20 MHz bandwidth includes 256 consecutive subcarriers in all. The subcarriers are numbered in ascending order of subcarrier frequencies. Subcarrier index values are -128, -127, ..., 0, ..., 126, and 127, that is, from -128 to 127 with an increment of 1. A subcarrier in an RU is classified into two types: a data (data) subcarrier and a pilot (pilot) subcarrier. The data subcarrier is used to carry data information from an upper layer. The pilot subcarrier transfers a fixed value, which is used by a receive end to estimate a phase and perform phase correction. Table 1 shows index values of RUs in the 20 MHz bandwidth, subcarrier index ranges corresponding to the RUs, and pilot subcarrier indexes. RU# represents an index of an RU. [a: b] represents index values of subcarriers starting from a, ending at b, and including a and b, with an increment of 1. {x, y, ...,} represents indexes corresponding to pilot subcarriers included in the RU. A number of digits in {} represents a number of pilot subcarriers.

**Table 1**

| RU type | RU index, subcarrier index range, and pilot subcarrier index | | | | |
|---|---|---|---|---|---|
| 26-tone RU 2 pilot | RU 1 [-121: -96] {-116, -102} | RU 2 [-95: -70] {-90, -76} | RU 3 [-68: -43] {-62, -48} | RU 4 [-42: -17] {-36, -22} | RU 5 [-16: -4, 4: 16] {-10, 10} |
| | RU 6 [17: 42] {22, 36} | RU 7 [43: 68] {48, 62} | RU 8 [70: 95] {76, 90} | RU 9 [96: 121] {102, 116} | |
| 52-tone RU 4 pilot | RU 1 [-121: -70] {-116, -102, - 90, -76} | RU 2 [-68: -17] {-62, -48, - 36, -22} | RU 3 [17: 68] {22, 36, 48, 62} | RU 4 [70: 121] {76, 90, 102, 116} | |
| 106-tone RU 4 pilot | RU 1 [-122: -17] {-116, -90, -48, -22} | | RU 2 [17: 122] {22, 48, 90, 116} | | |
| 242-tone RU 8 pilot | RU 1 [-122: -2, 2: 122] {-116, -90, -48, -22, 22, 48, 90, 116} | | | | |

It can be seen from Table 1 that the 26-tone RU includes a total of 24 data subcarriers and two pilot subcarriers, the 52-tone RU includes a total of 48 data subcarriers and four pilot subcarriers, the 106-tone RU includes a total of 102 data subcarriers and four pilot subcarriers, and the 242-tone RU includes a total of 234 data subcarriers and eight pilot subcarriers. It may be understood that Table 1 further shows the index values of the RUs in the 20 MHz bandwidth, the subcarrier index ranges corresponding to the RUs, and the pilot subcarrier indexes. In other words, Table 1 may be split into two or more tables. For example, Table 1 is split into two tables. One table shows the index values of the RUs in the 20 MHz bandwidth and the subcarrier index ranges corresponding to the RUs. The other table shows the indexes of the pilot subcarriers in the RUs in the 20 MHz bandwidth. This can be clearly seen from Table 1, and details are not described one by one herein. Similarly, Table 2, Table 3, and the like below may be split and transformed in a same manner, and details are not described below.

When a bandwidth is 40 MHz, the 40 MHz bandwidth includes a total of 512 subcarriers, and the subcarriers are numbered in ascending order of subcarrier frequencies. Subcarrier index values are -256 to 255. Table 2 shows index values of RUs in the 40 MHz bandwidth, subcarrier index ranges corresponding to the RUs, and pilot subcarrier indexes.

**Table 2**

| RU type | RU index, subcarrier range, and pilot subcarrier location | | | | |
|---|---|---|---|---|---|
| 26-tone RU 2 pilot | RU 1 [-243: -218] {-238, -224} | RU 2 [-217: -192] {-212, -198} | RU 3 [-189: -164] {-184, -170} | RU 4 [-163: -138] {-158, -144} | RU 5 [-136: -111] {-130, -116} |
| | RU 6 [-109: -84] {-104, -90} | RU 7 [-83: -58] {-78, -64} | RU 8 [-55: -30] {-50, -36} | RU 9 [-29: -4] {-24, -10} | |
| | RU 10 [4: 29] {10, 24} | RU 11 [30: 55] {36, 50} | RU 12 [58: 83] {64, 78} | RU 13 [84: 109] {90, 104} | RU 14 [111: 136] {116, 130} |
| | RU 15 [138: 163] {144, 158} | RU 16 [164: 189] {170, 184} | RU 17 [192: 217] {198, 212} | RU 18 [218: 243] {224, 238} | |
| 52-tone RU 4 pilot | RU 1 [-243: -192] {-238, -224, - 212, -198} | RU 2 [-189: -138] {-184, -170, -158, -144} | RU 3 [-109: -58] {-104, -90, - 78, -64} | RU 4 [-55: -4] {-50, -36, - 24, -10} | |
| | RU 5 [4: 55] {10, 24, 36, 50} | RU 6 [58: 109] {64, 78, 90, 104} | RU 7 [138: 189] {144, 158, 170, 184} | RU 8 [192: 243] {198, 212, 224, 238} | |
| 106-tone RU 4 pilot | RU 1 [-243: -138] {-238, -212, - 170, -144} | RU 2 [-109: -4] {-104, -78, - 36, -10} | RU 3 [4: 109] {10, 36, 78, 104} | RU 4 [138: 243] {144, 170, 212, 238} | |
| 242-tone RU 8 pilot | RU 1 [-244: -3] {-238, -212, -170, -144, -104, -78, -36, -10} | | RU 2 [3: 244] {10, 36, 78, 104, 144, 170, 212, 238} | | |
| 484-tone RU 16 pilot | RU 1 [-244: -3, 3: 244] {-238, -212, -170, -144, -104, -78, -36,-10, 10, 36, 78, 104, 144, 170, 212, 238} | | | | |

It can be seen from Table 2 that the 484-tone RU has a total of 468 data subcarriers and 16 pilot subcarriers.

When a bandwidth is 80 MHz, the 80 MHz bandwidth includes a total of 1024 subcarriers, and the subcarriers are numbered in ascending order of subcarrier frequencies. Subcarrier index values are -512 to 511. Table 3 shows index values of RUs in the 80 MHz bandwidth, subcarrier index ranges corresponding to the RUs, and pilot subcarrier indexes.

**Table 3**

| RU type | RU index, subcarrier range, and pilot subcarrier location | | | | |
|---|---|---|---|---|---|
| 26-tone RU 2 pilot | RU 1 [-499: -474] {-494, -480} | RU 2 [-473: -448] {-468, -454} | RU 3 [-445: -420] {-440, -426} | RU 4 [-419: -394] {-414, -400} | RU 5 [-392: -367] {-386, -372} |
| | RU 6 [-365: -340] {-360, -346} | RU 7 [-339: -314] {-334, -320} | RU 8 [-311: -286] {-306, -292} | RU 9 [-285: -260] {-280, -266} | |
| | RU 10 [-252: -227] {-246, -232} | RU 11 [-226: -201] {-220,-206} | RU 12 [-198: -173] {-192, -1781 | RU 13 [-172: -147] {-166, -152} | RU 14 [-145: -120] {-140, -126} |
| | RU 15 [-118: -93] {-112, -98} | RU 16 [-92: -67] {-86, -72} | RU 17 [-64: -39] {-58, -44} | RU 18 [-38: -13] {-32, -18} | RU 19 [Undefined] |
| | RU 20 [13: 38] {18, 32} | RU 21 [39: 64] {44, 58} | RU 22 [67: 92] {72, 86} | RU 23 [93: 118] {98, 112} | RU 24 [120: 145] {126, 140} |
| | RU 25 [147: 172] {152, 166} | RU 26 [173: 198] {178, 192} | RU 27 [201: 226] {206, 220} | RU 28 [227: 252] {232, 246} | |
| | RU 29 [260: 285] {266, 280} | RU 30 [286: 311] {292, 306} | RU 31 [314: 339] {320, 334} | RU 32 [340: 365] {346, 360} | RU 33 [367: 392] {372, 386} |
| | RU 34 [394: 419] {400, 414} | RU 35 [420: 445] {426, 440} | RU 36 [448: 473] {454, 468} | RU 37 [474: 499] {480, 494} | |
| 52-tone RU 4 pilot | RU 1 [-499: -448] {-494, -480, - 468, -454} | RU 2 [-445: -394] {-440, -426, - 414, -400} | RU 3 [-365: -314] {-360, -346, -334, -320} | RU 4 [-311: -260] {-306, -292, -280, -266} | |
| | RU 5 [-252: -201] {-246, -232, - 220, -206} | RU 6 [-198: -147] {-192, -178, - 166, -152} | RU 7 [-118: -67] {-112, -98, - 86, -72} | RU 8 [-64: -13] {-58, -44, - 32, -18} | |
| | RU 9 [13: 64] {18, 32, 44, 58} | RU 10 [67: 118] {72, 86, 98, 112} | RU 11 [147: 198] {152, 166, 178, 192} | RU 12 [201: 252] {206, 220, 232, 246} | |
| | RU 13 [260: 311] {266, 280, 292, 306} | RU 14 [314: 365] {320, 334, 346, 360} | RU 15 [394: 445] {400, 414, 426, 440} | RU 16 [448: 499] {454, 468, 480, 494} | |
| 106-tone RU 4 pilot | RU 1 [-499: -394] {-494, -468, - 426, -400} | RU 2 [-365: -260] {-360, -334, - 292, -266} | RU 3 [-252: -147] {-246, -220, -178, -152} | RU 4 [-118: -13] {-112, -86, - 44, -18} | |
| | RU 5 [13: 118] {18, 44, 86, 112} | RU 6 [147: 252] {152, 178, 220, 246} | RU 7 [260: 365] {266, 292, 334, 360} | RU 8 [394: 499] {400, 426, 468, 494} | |
| 242-tone RU 8 pilot | RU 1 [-500: -259] {-494, -468, -426, -400, -360, -334, -292, -266} | | RU 2 [-253: -12] {-246, -220, -178, -152, -112, -56, -44, -18} | | |
| | RU 3 [12: 253] {18, 44, 86, 112, 152, 178, 220, 246} | | RU 4 [259: 500] {266, 292, 334, 360, 400, 426, 468, 494} | | |
| 484-tone RU 16 pilot | RU 1 [-500:-259, -253: -12] {-494, -468, -426, -400, -360, -334, -392, -266, -246, - 220, -178, -152, -112, -86, -44, -18} | | | | |
| | RU 2 [12: 253, 259: 500] {18, 44, 86, 112, 152, 178, 220, 246, 266, 292, 334, 360, 400, 426, 468, 494} | | | | |
| 996-tone RU 16 pilot | RU 1 [-500: -3, 3: 500] [-468, -400, -334, -266, -220, -152, -86, -18, 18, 86, 152, 220, 266, 334, 400, 468} | | | | |

It can be seen from Table 3 that the 996-tone RU has a total of 980 data subcarriers and 16 pilot subcarriers.

For subcarrier index ranges and indexes of pilot subcarriers in RUs included in a 160 MHz bandwidth or a larger bandwidth, refer to definitions in an existing standard or protocol. For example, subcarrier index ranges and indexes of pilot subcarriers in RUs included in a 160 MHz bandwidth or a larger bandwidth are determined based on the subcarrier index ranges and the indexes of the pilot subcarriers in the RUs included in the 80 MHz bandwidth. Specifically, the subcarrier index ranges of the RUs included in the 160 MHz bandwidth are obtained by offsetting, based on an offset value, the subcarrier index ranges of the RUs included in the 80 MHz bandwidth, and the indexes of the pilot subcarriers in the RUs included in the 160 MHz bandwidth are obtained by offsetting, based on the offset value, the indexes of the pilot subcarriers in the RUs included in the 80 MHz bandwidth. The offset value includes ±512 (512 is 1/2 of a number of subcarriers included in the 80 MHz bandwidth). Subcarrier index ranges of RUs included in a 320 MHz bandwidth are obtained by offsetting, based on an offset value, the subcarrier index ranges of the RUs included in the 160 MHz bandwidth, and indexes of pilot subcarriers in the RUs included in the 320 MHz bandwidth are obtained by offsetting, based on the offset value, the indexes of the pilot subcarriers in the RUs included in the 160 MHz bandwidth. The offset value includes ±1024 (1024 is 1/2 of a number of subcarriers included in the 160 MHz bandwidth). By analogy, subcarrier index ranges and indexes of pilot subcarriers in RUs included in a larger bandwidth may be obtained.

A 106-tone RU included in a 160 MHz bandwidth is used as an example. Subcarrier index ranges of a 106-tone RU 1 to a 106-tone RU 8 that are included in the 160 MHz bandwidth are respectively obtained by subtracting 512 from subcarrier index ranges of a 106-tone RU 1 to a 106-tone RU 8 that are included in an 80 MHz bandwidth, and indexes of pilot subcarriers in the 106-tone RU 1 to the 106-tone RU 8 that are included in the 160 MHz bandwidth are respectively obtained by subtracting 512 from indexes of pilot subcarriers in the 106-tone RU 1 to the 106-tone RU 8 that are included in the 80 MHz bandwidth. Subcarrier index ranges of a 106-tone RU 9 to a 106-tone RU 16 that are included in the 160 MHz bandwidth are respectively obtained by adding 512 to the subcarrier index ranges of the 106-tone RU 1 to the 106-tone RU 8 that are included in the 80 MHz bandwidth, and indexes of pilot subcarriers in the 106-tone RU 9 to the 106-tone RU 16 that are included in the 160 MHz bandwidth are respectively obtained by adding 512 to the indexes of the pilot subcarriers in the 106-tone RU 1 to the 106-tone RU 8 that are included in the 80 MHz bandwidth. For example, the subcarrier index range of the 106-tone RU 1 included in the 80 MHz bandwidth is [-499: -394], and the subcarrier index range of the 106-tone RU 1 included in the 160 MHz bandwidth is [-1011: -906] obtained by subtracting 512. The index range of the pilot subcarriers in the 106-tone RU 1 included in the 80 MHz bandwidth is {-494, -468, -426, - 400}, and the subcarrier index range of the 106-tone RU 1 included in the 160 MHz bandwidth is {-1006, -980, -938, -912} obtained by subtracting 512. For brevity, subcarrier index ranges and indexes of pilot subcarriers in RUs included in a 160 MHz bandwidth or a larger bandwidth are not shown in embodiments of this application.

3. Multi-resource unit (multi-RU, MRU): The MRU includes a plurality of consecutive or inconsecutive RUs. In other words, the MRU is an RU formed by combining a plurality of RUs.

For example, a plurality MRUs are introduced in the 802.11be protocol: a 52+26-tone MRU including one 52-tone RU and one 26-tone RU, a 106+26-tone MRU including one 106-tone RU and one 26-tone RU, a 484+242-tone MRU including one 484-tone RU and one 242-tone RU, a 996+484-tone MRU including one 996-tone RU and one 484-tone RU, a 242+484+996-tone MRU including one 242-tone RU, one 484-tone RU, and one 996-tone RU, a 2*996+484-tone MRU including two 996-tone RUs and one 484-tone RU, a 3*996-tone MRU including three 996-tone RUs, a 3*996+484-tone MRU including three 996-tone RUs and one 484-tone RU, and the like.

Subcarrier index ranges of different MRUs included in different bandwidths are obtained by splicing subcarrier index ranges of RUs forming the MRUs, and indexes of pilot subcarriers in the MRUs are indexes of pilot subcarriers in the RUs forming the MRUs. With reference to Table 4, the following uses an MRU included in a 20 MHz bandwidth as an example to describe a manner of determining a subcarrier index range and indexes of pilot subcarriers in the MRU.

Table 4 shows types, indexes, and combination forms of different MRUs included in the 20 MHz bandwidth.

**Table 4**

| MRU type (type) | MRU index (index) | MRU combination (combination) |
|---|---|---|
| 52+26-tone MRU | MRU 1 | 52-tone RU 2+26-tone RU 2 |
| | MRU 2 | 52-tone RU 2+26-tone RU 5 |
| | MRU 3 | 52-tone RU 3+26-tone RU 8 |
| 106+26-tone RU | MRU 1 | 106-tone RU 1+26-tone RU 5 |
| | MRU 2 | 106-tone RU 2+26-tone RU 2 |

A 52+26-tone MRU 1 is used as an example. The 52+26-tone MRU 1 includes a 52-tone RU 2 and a 26-tone RU 2. It can be seen from Table 1 that subcarrier index ranges of the 52-tone RU 2 and the 26-tone RU 2 are [-95: -70] and [-68: -17] respectively. A subcarrier index range of the 52+26-tone MRU 1 is [-95: -70, -68: -17] obtained by splicing the subcarrier index ranges of the 52-tone RU 2 and the 26-tone RU 2. It can be seen from Table 1 that indexes of pilot subcarriers in the 52-tone RU 2 and the 26-tone RU 2 are {-90, -76} and {-62, -48, -36, -22} respectively. Therefore, indexes of pilot subcarriers in the 52+26-tone MRU 1 are {90, -76, -62, -48, -36, -22}.

Based on the foregoing planning of the tone plan and the RU distribution, embodiments of this application provide a method for transmitting a physical layer protocol data unit, to increase a number of pilot subcarriers, thereby helping reduce adverse impact of a carrier frequency offset and/or phase noise on communication quality.

It should be understood that, for ease of understanding and description, the following uses interaction between a first device and a second device as an example to describe in detail the method provided in embodiments of this application. However, this should not constitute any limitation on an execution body of the method provided in this application. For example, the first device shown in the following embodiments may be replaced with a component (for example, a circuit, a chip, or a chip system) disposed in the first device. The second device shown in the following embodiments may be replaced with a component (for example, a circuit, a chip, or a chip system) disposed in the second device. The first device may be an AP or a STA, and the second device may be an AP or a STA.

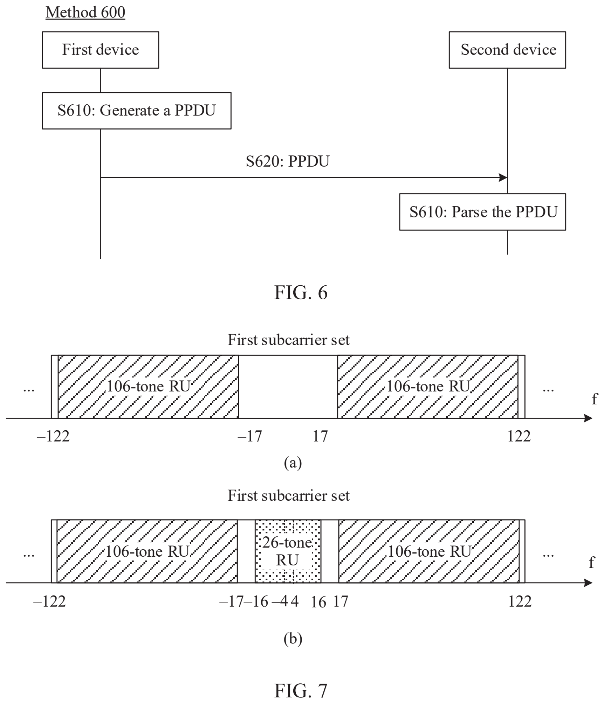

FIG. 6 is a schematic flowchart of a communication method according to an embodiment of this application. As shown in FIG. 6, the method 600 may include the following steps.

S610: A first device generates a physical layer protocol data unit (physical layer protocol data unit, PPDU).

The PPDU includes first information carried in a first subcarrier set. The first information includes data information and pilot information. The first information is information to be sent to a second device.

The first subcarrier set is a subcarrier set including a specific number of subcarriers and a specific range of subcarriers. For example, the first subcarrier set may also be referred to as a transformed RU or a transformed MRU, or referred to as an enhanced RU or an enhanced MRU. For example, if a number and a range of subcarriers included in the first subcarrier set are the same as a number and a range of subcarriers included in the 242-tone RU, the first subcarrier set may be referred to as a transformed 242-tone RU or an enhanced 242-tone RU. The first subcarrier set may alternatively be named another name. This is not limited in embodiments of this application.

For example, a subcarrier index range corresponding to the first subcarrier set is the same as a subcarrier index range corresponding to one RU or one MRU. The subcarrier index range corresponding to the first subcarrier set is a range of indexes of subcarriers included in the first subcarrier set. The subcarrier index range of the RU or the MRU is a range of indexes of subcarriers included in the RU or the MRU. It should be noted that, compared with the RU or the MRU whose corresponding subcarrier index range is the same as the subcarrier index range corresponding to the first subcarrier set, the first subcarrier set includes more pilot subcarriers. A specific reason why the first subcarrier set includes more pilot subcarriers is described in detail below.

The RU or the MRU may be an RU or an MRU defined in an existing protocol or standard, or may be an RU or an MRU defined in a future protocol or standard. This is not limited in embodiments of this application. For example, the subcarrier index range corresponding to the first subcarrier set is the same as a subcarrier index range of one 242-tone RU, one 484-tone RU, or one 996-tone RU. For another example, the subcarrier index range corresponding to the first subcarrier set is the same as a subcarrier index range of one 106+26-tone MRU or one 484+242-tone MRU.

A bandwidth corresponding to the PPDU is not limited in embodiments of this application. It can be seen from Table 1 to Table 3 above that, when a size of an RU or an MRU remains unchanged, if bandwidths including the RU or the MRU are different, subcarrier index ranges corresponding to the RU or the MRU may be different. Therefore, when the size of the RU or the MRU remains unchanged, if bandwidths corresponding to the PPDU are different, subcarrier index ranges corresponding to the first subcarrier set may be different. For example, a subcarrier index range corresponding to the first subcarrier set is the same as a subcarrier index range corresponding to a 242-tone RU. If the bandwidth corresponding to the PPDU is 20 MHz, it can be seen from Table 1 above that the subcarrier index range corresponding to the first subcarrier set is [-122: -2, 2: 122]; or if the bandwidth corresponding to the PPDU is 40 MHz, it can be seen from Table 2 above that the subcarrier index range corresponding to the first subcarrier set is [-244: -3] or [3: 244]; or if the bandwidth corresponding to the PPDU is 80 MHz, it can be seen from Table 3 above that the subcarrier index range corresponding to the first subcarrier set is [-500: -259], [-253: -12], [12: 253], or [259: 500].

In a possible implementation, the subcarrier index range corresponding to the first subcarrier set is the same as subcarrier index ranges corresponding to a plurality of RUs and/or a plurality of MRUs. For example, the bandwidth corresponding to the PPDU is 40 MHz, and the subcarrier index range corresponding to the first subcarrier set is the same as subcarrier index ranges of one 106-tone RU and one 242-tone RU, for example, the RU 1 in 106-tone RUs and the RU 2 in 242-tone RUs in Table 2 above. In this case, the subcarrier index range of the first subcarrier set is [-243: -138, 3: 244]. The subcarrier index range of the first subcarrier set may alternatively be [-109: -4, 3: 244], [-244: -3, 4: 109], or [-244: -3, 138: 243], which may be obtained based on different combinations of one 106-tone RU and one 242-tone RU in Table 2.

It should be understood that the subcarrier index range corresponding to the first subcarrier set may alternatively be different from subcarrier index ranges corresponding to one or more RUs and/or one or more MRUs. This is not limited in embodiments of this application. It should be noted that, in the following embodiment, an example in which the subcarrier index range corresponding to the first subcarrier set is the same as a subcarrier index range corresponding to one RU or one MRU is used for description.

The first subcarrier set includes at least one first RU and/or at least one first MRU. The first RU may be an RU defined in an existing protocol or standard, or an RU defined in a future protocol or standard. The first MRU may be an MRU defined in an existing protocol or standard, or an MRU defined in a future protocol or standard. This is not limited in embodiments of this application. For ease of description, the first RU or the first MRU included in the first subcarrier set is collectively referred to as a subunit below. To be specific, the first subcarrier set includes at least one subunit, and each of the at least one subunit is a first RU or a first MRU.

For example, a number of subcarriers included in each of the at least one subunit is less than a number of subcarriers included in the first subcarrier set. For example, the subcarrier index range corresponding to the first subcarrier set is the same as a subcarrier index range corresponding to a 242-tone RU, that is, the first subcarrier set includes 242 subcarriers. In this case, the first subcarrier set may include one or more of the following subunits: a 26-tone RU, a 52-tone RU, a 106-tone RU, a 26+52-tone MRU, or a 106+26-tone MRU. For another example, the subcarrier index range corresponding to the first subcarrier set is the same as a subcarrier index range corresponding to a 484-tone RU, that is, the first subcarrier set includes 484 subcarriers. In this case, the first subcarrier set may include one or more of the following subunits: a 26-tone RU, a 52-tone RU, a 106-tone RU, a 242-tone RU, a 26+52-tone MRU, or a 106+26-tone MRU. For another example, the subcarrier index range corresponding to the first subcarrier set is the same as a subcarrier index range corresponding to a 996-tone RU, that is, the first subcarrier set includes 996 subcarriers. In this case, the first subcarrier set may include one or more of the following subunits: a 26-tone RU, a 52-tone RU, a 106-tone RU, a 242-tone RU, a 484-tone RU, a 26+52-tone MRU, a 106+26-tone MRU, or a 484+242-tone MRU.

FIG. 7 shows an example of at least one subunit included in the first subcarrier set, where the subcarrier index range corresponding to the first subcarrier set is the same as a subcarrier index range corresponding to a 242-tone RU in a 20 MHz bandwidth. As shown in (a) in FIG. 7, the first subcarrier set may include two 106-tone RUs. As shown in (b) in FIG. 7, the first subcarrier set may include two 106-tone RUs and one 26-tone RU. It should be understood that a 1^{st} 106-tone RU and the 26-tone RU shown in (b) in FIG. 7 may be collectively referred to as a 106+26-tone MRU, or the 26-tone RU and a 2^{nd} 106-tone RU shown in (b) in FIG. 7 may be collectively referred to as a 106+26-tone MRU. It should be noted that an example of a possible form of the at least one subunit included in the first subcarrier set is described in FIG. 7, and meanings of subcarrier indexes indicated by horizontal coordinates in FIG. 7 may not be considered temporarily.

For example, a subcarrier index range corresponding to a subunit in the at least one subunit is the same as or different from a subcarrier index range corresponding to an RU or an MRU defined in an existing protocol. In other words, a location of the subunit in the at least one subunit is the same as or different from a location of the RU or the MRU defined in the existing protocol. For example, if the subunit is a 26-tone RU, a subcarrier index range corresponding to the subunit may be the same as a subcarrier index range of the 26-tone RU shown in Table 1 to Table 3, or a subcarrier index range of the subunit may be different from a subcarrier index range corresponding to the 26-tone RU shown in Table 1 to Table 3.

It should be noted that, that the subcarrier index range corresponding to the subunit is different from the subcarrier index range corresponding to the RU or the MRU defined in the existing protocol includes: A data subcarrier index range corresponding to the subunit is different from a data subcarrier index range corresponding to the RU or the MRU defined in the existing protocol, and/or a pilot subcarrier index range corresponding to the subunit is different from a pilot subcarrier index range corresponding to the RU or the MRU defined in the existing protocol. For example, the subunit includes 26 subcarriers, and indexes of 24 data subcarriers in the 26 subcarriers included in the subunit are the same as indexes of data subcarriers included in the 26-tone RU shown in Table 1 to Table 3, but indexes of two pilot subcarriers in the 26 subcarriers included in the subunit are different from indexes of pilot subcarriers included in the 26-tone RU shown in Table 1 to Table 3.

It should be noted that, when the location of the subunit is different from the location of the RU or the MRU defined in the existing protocol, a number of data subcarriers included in the subunit and a number of pilot subcarriers included in the subunit are the same as a number of data subcarriers included in the RU or the MRU defined in the existing protocol and a number of pilot subcarriers included in the RU or the MRU defined in the existing protocol. When the subunit includes a data subcarriers and b pilot subcarriers, the a data subcarriers may be any a subcarriers in the subcarriers included in the subunit, and the b pilot subcarriers are subcarriers other than the a data subcarriers in the subcarriers included in the subunit.

As shown in (a) in FIG. 7, locations of two 106-tone RUs included in the first subcarrier set are the same as locations of two 106-tone RUs included in a 20 MHz bandwidth defined in an existing protocol. In this case, subcarrier index ranges respectively corresponding to the two 106-tone RUs shown in (a) in FIG. 7 are [-122: -17] and [17: 122]. Alternatively, one 106-tone RU included in the first subcarrier set may include any 106 subcarriers included in the first subcarrier set, and the other 106-tone RU may include any 106 subcarriers in remaining 136 subcarriers.

As shown in (b) in FIG. 7, locations of two 106-tone RUs included in the first subcarrier set are the same as locations of two 106-tone RUs included in a 20 MHz bandwidth defined in an existing protocol, and a location of one 26-tone RU included in the first subcarrier set is the same as a location of a 5^{th} 26-tone RU included in the 20 MHz bandwidth defined in the existing protocol. In this case, subcarrier index ranges respectively corresponding to the two 106-tone RUs and the 26-tone RU that are shown in (b) in FIG. 7 are [-122: -17], [17: 122], and [-16: -4, 4: 16]. Alternatively, one 106-tone RU included in the first subcarrier set may include any 106 subcarriers included in the first subcarrier set, the other 106-tone RU may include any 106 subcarriers in remaining 136 subcarriers, and the 26-tone RU may include any 26 subcarriers in remaining 30 subcarriers.

For example, a number of data subcarriers included in the subunit in the at least one subunit and a number of pilot subcarriers included in the subunit in the at least one subunit are the same as a number of data subcarriers included in an RU or an MRU defined in an existing protocol and a number of pilot subcarriers included in an RU or an MRU defined in an existing protocol. For example, if the subunit is a 26-tone RU, the subunit includes 24 data subcarriers and two pilot subcarriers. For another example, if the subunit is a 106-tone RU, the subunit includes 102 data subcarriers and four pilot subcarriers.

The following describes a manner in which the first information is carried in the first subcarrier set.

For example, the data information included in the first information is carried on a data subcarrier corresponding to the at least one subunit, the pilot information included in the first information includes first pilot information, and the first pilot information is carried on a first pilot subcarrier corresponding to the at least one subunit. The first pilot information may also be referred to as a first pilot sequence or a first pilot value. A number of pilot values included in the first pilot information is the same as a number of first pilot subcarriers corresponding to the at least one subunit. At least one pilot value included in the first pilot information one-to-one corresponds to at least one first pilot subcarrier corresponding to the at least one subunit.

In a possible implementation, the first subcarrier set includes Y subcarriers, and the at least one subunit includes L data subcarriers and K first pilot subcarriers. Y, L, and K are all positive integers, and Y≥L+K. The first pilot subcarrier is a pilot subcarrier included in an RU or an MRU defined in an existing protocol or standard. It should be noted that, if a number of subunits included in the first subcarrier set is greater than 1, Y≥L+K; or if a number of subunits included in the first subcarrier set is equal to 1, Y>L+K.

It should be understood that L is a sum of numbers of data subcarriers included in all subunits in the at least one subunit, and K is a sum of numbers of first pilot subcarriers included in all the subunits in the at least one subunit. As shown in (a) in FIG. 7, the first subcarrier set includes two 106-tone RUs. In this case, L=204 (102+102), and K=8 (4+4). As shown in (b) in FIG. 7, the first subcarrier set includes two 106-tone RUs and one 26-tone RU. In this case, L=228 (102+102+24), and K=10 (4+4+2).

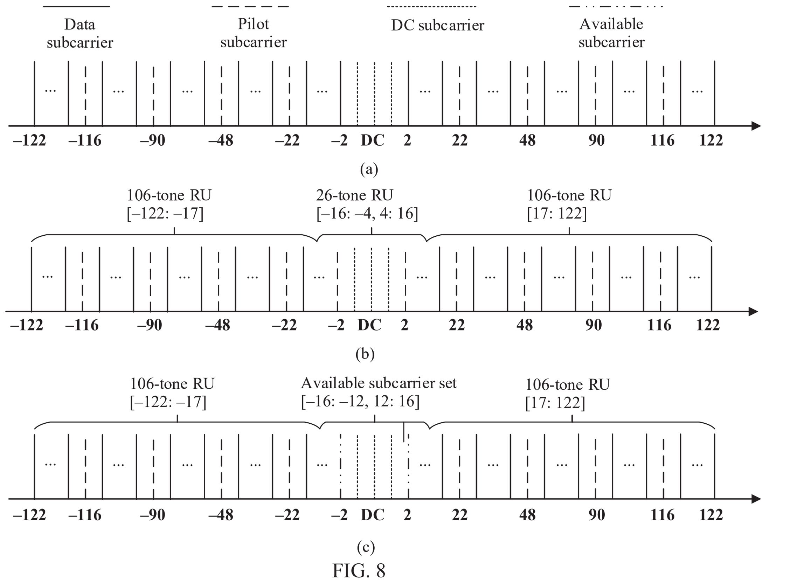

FIG. 8 shows a difference, in a case in which the first subcarrier set includes at least one subunit, between distribution of subcarriers included in the first subcarrier set and distribution of subcarriers included in a 242-tone RU in an example in which the subcarrier index range corresponding to the first subcarrier set is the same as a subcarrier index range corresponding to the 242-tone RU in a 20 MHz bandwidth.

(a) in FIG. 8 is a diagram of a tone plan of the 242-tone RU in the 20 MHz bandwidth. The 242-tone RU includes 234 data subcarriers and eight pilot subcarriers. The corresponding subcarrier index range is [-122: 2, 2: 122]. Indexes of the eight pilot subcarriers are {-116, -90, - 48, -22, 22, 48, 90, 116}. A set obtained by removing the indexes of the pilot subcarriers from a set [-122: 2, 2: 122] is a data subcarrier set.

When the first subcarrier set includes two 106-tone RUs and one 26-tone RU, distribution of subcarriers included in the first subcarrier set is shown in (b) in FIG. 8. Specifically, subcarrier index ranges corresponding to the two 106-tone RUs and the 26-tone RU are [-122: - 177], [17: 122], and [-16: -4, 4: 16] respectively. Pilot subcarrier indexes corresponding to the two 106-tone RUs and the 26-tone RU are {-116, -90, -48, -22}, {22, 48, 90, 116} and {-10, - 10} respectively. That is, after such transformation, first pilot subcarriers within the range corresponding to the first subcarrier set include {-116, -90, -48, -22, 22, 48, 90, 116, -10, -10}, and a number of pilot subcarriers is increased compared with that of a 242-tone RU.

When the first subcarrier set includes two 106-tone RUs, distribution of subcarriers in the first subcarrier set is shown in (c) in FIG. 8. Subcarrier index ranges corresponding to the two 106-tone RUs are [-122: -177] and [17: 122] respectively. Pilot subcarrier indexes corresponding to the two 106-tone RUs are {-116, -90, -48, -22} and {22, 48, 90, 116} respectively. That is, after such transformation, first pilot subcarriers within the range corresponding to the first subcarrier set include {-116, -90, -48, -22, 22, 48, 90, 116}.

In a possible implementation, the Y subcarriers included in the first subcarrier set further include M second pilot subcarriers. The pilot information further includes second pilot information carried on the M second pilot subcarriers. The M second pilot subcarriers belong to a subcarrier other than the L data subcarriers and the K first pilot subcarriers in the Y subcarriers. M is a positive integer. The second pilot information may also be referred to as a second pilot sequence or a second pilot value. A number of pilot values included in the second pilot information is M. The M pilot values included in the second pilot information one-to-one correspond to the M second pilot subcarriers.

It may be understood that the M second pilot subcarriers are different from the K first pilot subcarriers. The M second pilot subcarriers are a subcarrier other than a subcarrier included in an RU or an MRU in an existing protocol. In other words, M subcarriers other than a subcarrier included in the at least one subunit in the Y subcarriers included in the first subcarrier set may be used as a second pilot subcarrier. It may be understood that, after the solutions of this application are applied, both the first pilot subcarrier and the second pilot subcarrier in this specification implement a pilot subcarrier function. "First" and "second" are merely used to distinguish from a definition of a pilot subcarrier defined in an existing standard, the "first pilot subcarrier" is a set of subcarriers defined as pilot subcarriers in the existing finalized 802.11ax standard, and the "second pilot subcarrier" is a subcarrier in a subcarrier set #1. The subcarrier set #1 includes a remaining subcarrier that is in a subcarrier other than a data subcarrier defined in the existing finalized 802.11ax standard and that is not defined as a pilot subcarrier in the existing finalized 802.11ax standard.

As shown in (b) in FIG. 8, a subcarrier set other than subcarriers included in the two 106-tone RUs and the 26-tone RU in the 242 subcarriers included in the first subcarrier set is [-3: 3]. After a DC subcarrier index in the set [-3: 3] is excluded, a remaining available subcarrier set is {-3, -2, 2, 3}. Therefore, the M second pilot subcarriers may be one or more subcarriers in the available subcarrier set {-3, -2, 2, 3}, that is, M=1, 2, 3, or 4.

As shown in (c) in FIG. 8, a subcarrier set other than subcarriers included in the two 106-tone RUs in the 242 subcarriers included in the first subcarrier set is [-16: 16]. After a DC subcarrier index in the set [-16: 16] is excluded, a remaining available subcarrier set is [-16: -2, 2, 16]. Therefore, the M second pilot subcarriers may be one or more subcarriers in the available subcarrier set [-16: -2, 2, 16], that is, M=1, 2, ..., or 30.

In a possible implementation, a subcarrier set corresponding to the bandwidth corresponding to the PPDU further includes T third pilot subcarriers. The pilot information further includes third pilot information carried on the T third pilot subcarriers, and the T pilot subcarriers are different from the Y subcarriers. T is a positive integer. The third pilot information may also be referred to as a third pilot sequence or a third pilot value. A number of pilot values included in the third pilot information is T. The T pilot values included in the third pilot information one-to-one correspond to the T third pilot subcarriers.

It may be understood that the T third pilot subcarriers are different from the K first pilot subcarriers and the M second pilot subcarriers. The T third pilot subcarriers are a subcarrier other than the first subcarrier set. In other words, T subcarriers, other than a subcarrier included in the first subcarrier set, in the subcarrier set corresponding to the bandwidth corresponding to the PPDU may be used as a third pilot subcarrier. It may be understood that, after the solutions of this application are applied, the first pilot subcarrier, the second pilot subcarrier, and the third pilot subcarrier in this specification all implement a pilot subcarrier function. "First", "second", and "third" are merely used to distinguish from a definition of the pilot subcarrier defined in an existing standard. The "third pilot subcarrier" is a subcarrier in the subcarrier set #1. A difference between the "second pilot subcarrier" and the "third pilot subcarrier" lies in that the "second pilot subcarrier" is included in the first subcarrier set and the "third pilot subcarrier" is included outside the first subcarrier set.

The T third pilot subcarriers are described by using an example in which the subcarrier index range of the first subcarrier set is the same as a subcarrier index range corresponding to a 242-tone RU in a 20 MHz bandwidth. As shown in FIG. 3, a subcarrier set corresponding to the 20 MHz bandwidth includes 256 subcarriers, and 242 subcarriers in the 256 subcarriers belong to a 242-tone RU. In addition, the subcarrier set corresponding to the 20 MHz bandwidth further includes 11 guard subcarriers and three DC subcarriers. Therefore, the T third pilot subcarriers may be one or more of the 11 guard subcarriers and the three direct current subcarriers, that is, T = 1, 2, ..., or 14.

In conclusion, the first subcarrier set and/or the bandwidth corresponding to the PPDU may include more pilot subcarriers if one or more of the following conditions are met: The first subcarrier set includes the at least one subunit, the Y subcarriers included in the first subcarrier set further include the M second pilot subcarriers, or the subcarrier set corresponding to the bandwidth corresponding to the PPDU includes the T third pilot subcarriers.

As shown in (b) in FIG. 8, the two 106-tone RUs and one 26-tone RU that are included in the first subcarrier set may provide 10 pilot subcarriers. The number of pilot subcarriers included in the first subcarrier set is two more than a number of pilot subcarriers included in the 242-tone RU. As described above, one or more subcarriers in the available subcarrier set {-3, -2, 2, 3} may further be used as second pilot subcarriers. In this case, the number of pilot subcarriers included in the first subcarrier set may be 11 to 14. As described above, when the bandwidth corresponding to the PPDU is 20 MHz, one or more of the 11 guard subcarriers and the three DC subcarriers in the 20 MHz bandwidth may be used as third pilot subcarriers. In this case, the number of pilot subcarriers included in the first subcarrier set may be 11 to 28.

As shown in (c) in FIG. 8, the two 106-tone RUs included in the first subcarrier set may provide eight pilot subcarriers. One or more subcarriers in the available subcarrier set [-16: -2, 2, 16] may further be used as second pilot subcarriers. In this case, the number of pilot subcarriers included in the first subcarrier set may be 9 to 38. As described above, when the bandwidth corresponding to the PPDU is 20 MHz, one or more of the 11 guard subcarriers and the three DC subcarriers in the 20 MHz bandwidth may be used as third pilot subcarriers. In this case, the number of pilot subcarriers included in the first subcarrier set may be 9 to 52.

It should be understood that, the first subcarrier set and/or the bandwidth corresponding to the PPDU include/includes more pilot subcarriers. This helps improve accuracy of estimating a carrier frequency offset and/or phase noise by a receiving device based on a pilot value carried on the pilot subcarrier included in the first subcarrier set and/or a pilot value carried on the pilot subcarrier included in the bandwidth corresponding tothe PPDU, and further helps reduce impact of the carrier frequency offset and/or the phase noise on communication quality.

It should be noted that, an objective of the foregoing description that the first subcarrier set includes the at least one subunit is to determine, based on the first pilot subcarrier and the data subcarrier that are included in the at least one subunit, the index of the pilot subcarrier included in the first subcarrier set and/or the bandwidth corresponding to the PPDU. In other words, S610 may be described as follows: The first device generates the PPDU. The PPDU includes the first information. The first information includes the data information and the pilot information. An index of a pilot subcarrier carrying the pilot information is determined based on the index of the first pilot subcarrier included in the at least one subunit and the index of the data subcarrier included in the at least one subunit. It should be understood that, when the index of the pilot subcarrier carrying the pilot information is determined, the first device may directly generate and/or send the PPDU based on the index of the pilot subcarrier carrying the pilot information. In other words, in a process of generating and/or sending the PPDU, the index of the pilot subcarrier carrying the pilot information is involved, but the at least one subunit included in the first subcarrier set is not involved. In other words, in PPDU transmission, transmission may be performed based on a final tone plan result. The tone plan includes distribution of a pilot subcarrier, a data subcarrier, a guard subcarrier, a null subcarrier, or a direct current subcarrier. The at least one subunit included in the first subcarrier set is merely a determining step for obtaining the tone plan result, and may be presented in a form of a final result, and an intermediate determining step is not included.

For example, when the first subcarrier set includes only the first pilot subcarrier, an index of the pilot subcarrier included in the first subcarrier set is equivalent to the index of the first pilot subcarrier included in the at least one subunit. For another example, when the first subcarrier set includes the first pilot subcarrier and the second pilot subcarrier, indexes of pilot subcarriers included in the first subcarrier set include an index of the first pilot subcarrier included in the at least one subunit and one or more indexes, other than a subcarrier index range corresponding to the at least one subunit, within the subcarrier index range corresponding to the first subcarrier set. For another example, when the first subcarrier set includes the first pilot subcarrier and the second pilot subcarrier, and the bandwidth corresponding to the PPDU includes the third pilot subcarrier, indexes of pilot subcarriers included in the bandwidth corresponding to the PPDU include the index of the first pilot subcarrier included in the at least one subunit, one or more indexes, other than a subcarrier index range corresponding to the at least one subunit, within the subcarrier index range corresponding to the first subcarrier set, and one or more indexes, other than the subcarrier index range corresponding to the first subcarrier set, within a subcarrier index range corresponding to the bandwidth corresponding to the PPDU.

For example, if the bandwidth corresponding to the PPDU is 20 MHz, indexes of pilot subcarriers included in the first subcarrier set include {-116, -90, -48, -22, -10, 10, 22, 48, 90, 116}, or indexes of pilot subcarriers included in the first subcarrier set include {-116, -90, -48, -22, -10, 10, 22, 48, 90, 116} and one or more of {-3, -2, 2, 3}.

For another example, if the bandwidth corresponding to the PPDU is 20 MHz, indexes of pilot subcarriers included in the first subcarrier set include {-116, -90, -48, -22, 22, 48, 90, 116} and one or more of [-16: -2, 2, 16].

It should be understood that an index of a data subcarrier included in the first subcarrier set includes an index other than the index of the pilot subcarrier included in the first subcarrier set in [-122: -2, 2: 122].

For another example, if the bandwidth corresponding to the PPDU is 20 MHz, indexes of pilot subcarriers included in the bandwidth corresponding to the PPDU include {-116, -90, -48, -22, -10, 10, 22, 48, 90, 116}, or indexes of pilot subcarriers included in the bandwidth corresponding to the PPDU include {-116, -90, -48, -22, -10, 10, 22, 48, 90, 116} and at least one of the following: one or more of [-3: 3] or one or more of [-128: -123, 123: 127].

For another example, if the bandwidth corresponding to the PPDU is 20 MHz, indexes of pilot subcarriers included in the bandwidth corresponding to the PPDU include {-116, -90, -48, -22, 22, 48, 90, 116} and at least one of the following: one or more of [-16: 16] or one or more of [-128: -123, 123: 127].

It should be understood that an index of a data subcarrier included in the bandwidth corresponding to the PPDU includes an index other than the index of the pilot subcarrier included in the first subcarrier set in [-122: -2, 2: 122]. An index of a guard subcarrier and/or an index of a DC subcarrier included in the bandwidth corresponding to the PPDU include/includes an index other than the index of the pilot subcarrier and the index of the data subcarrier included in the bandwidth corresponding to the PPDU in [-128: 127].

It should be understood that, if subcarrier index ranges corresponding to the first subcarrier set are different and/or bandwidths corresponding to the PPDU are different, indexes of pilot subcarriers included in the first subcarrier set and/or the bandwidth corresponding to the PPDU are different. For a manner of determining the index of the pilot subcarrier included in the first subcarrier set and/or the index of the pilot subcarrier included in the bandwidth corresponding to the PPDU, refer to the foregoing descriptions. For brevity, another possible form of the index of the pilot subcarrier included in the first subcarrier set and/or the index of the pilot subcarrier included in the bandwidth corresponding to the PPDU is not listed in embodiments of this application.

As described above, when the first subcarrier set includes the at least one subunit, although more pilot subcarriers can be obtained, there is a problem: When the at least one subunit is simultaneously allocated to one or more users, the at least one subunit may not be within an MRU set range. For example, the at least one subunit includes a 106+106-tone MRU, and the 106+106-tone MRU is not within an existing MRU set range. In this case, the first device cannot include first data on the L data subcarriers in the at least one subunit via an existing RU or MRU generation module.

To resolve the foregoing problem, this embodiment of this application further provides a manner in which the first device includes the data information included in the first information on the L data subcarriers in the at least one subunit. It should be noted that the manner in which the first device includes the data information on the L data subcarriers in the at least one subunit may be independently performed, or may be performed in combination with another solution described in this application. For example, when the first device or another device allocates a plurality of RUs or MRUs to a user (denoted as a user A), the first device may include, in the following manner of including the data information on the L data subcarriers in the at least one subunit, data to be sent to the user A on data subcarriers in the plurality of RUs or MRUs that are allocated to the user A. In other words, the following manner in which the first device includes the data information on the L data subcarriers in the at least one subunit may be independently performed without depending on another solution described in this application.

The following describes a manner in which the first device includes the data information on the L data subcarriers in the at least one subunit.

In a possible implementation, the first device maps X bits corresponding to the data information to the L data subcarriers in the at least one subunit via a general bit-to-constellation point generation module; or the first device generates L constellation points via a general bit-to-constellation point generation module based on X bits corresponding to the data information, and maps the L constellation points to the L data subcarriers in the at least one subunit. The general bit-to-constellation point generation module may include one or more modules before a frequency mapping module.

It should be understood that the general bit-to-constellation point generation module corresponds to the at least one subunit, and the general bit-to-constellation point generation module is different from an existing RU or MRU generation module. For example, when the at least one subunit includes a 106+106-tone MRU, the general bit-to-constellation point generation module is configured to map the X bits to 204 data subcarriers in the 106+106-tone MRU. The existing RU or MRU generation module corresponds to a size of an RU or MRU defined in an existing protocol. To be specific, the existing RU or MRU generation module may map a data bit to a data subcarrier in the existing RU or MRU. An existing RU generation module corresponding to a 26-tone RU is used as an example. The RU generation module is configured to: generate 24 constellation points based on data bits, and map the 24 constellation points to 24 data subcarriers in the 26-tone RU. Because the 106+106-tone MRU is not defined in an existing protocol or standard, the existing RU or MRU generation module does not have a function of mapping the X bits to the 204 data subcarriers included in the 106+106-tone MRU. In other words, the general bit-to-constellation point generation module is different from the existing RU or MRU generation module.

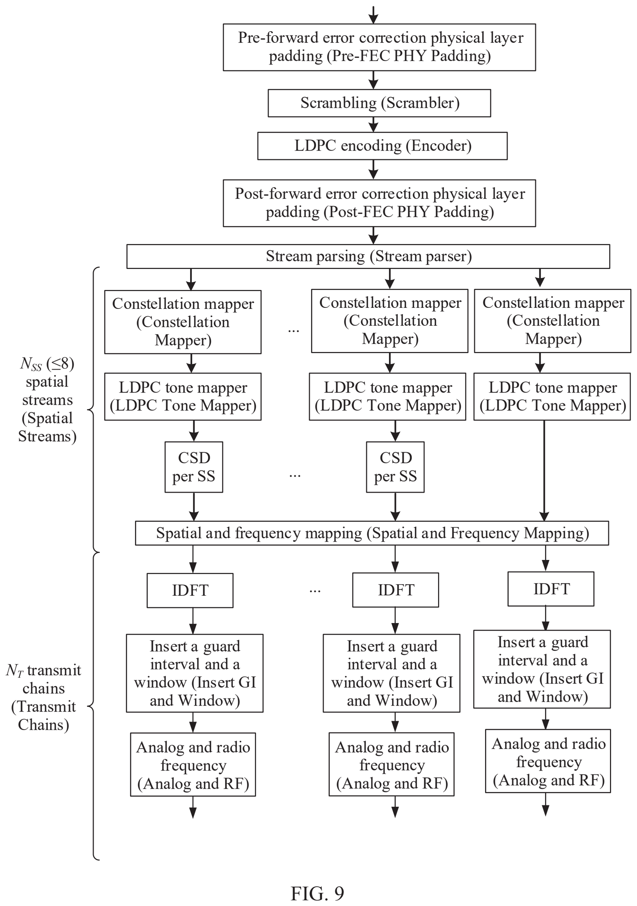

FIG. 9 is a diagram of a transmitter module (through LDPC coding) in a case in which a size of an RU or an MRU is less than 996 subcarriers. With reference to FIG. 9, the following describes a procedure in which the first device generates constellation points to be carried on L data subcarriers.

A manner of generating a data field in 802.11be is used as an example. A manner in which the first device generates a constellation point to be carried on a data subcarrier corresponding to the RU or the MRU may include the following steps:
(a) generating a service field and adding a PSDU physical layer service data unit (PHY service data unit, PSDU) behind the service field, where the PSDU includes the X bits corresponding to the data information;
(b) pre-forward error correction (forward error correction, FEC) physical layer padding (Pre-FEC PHY Padding), where the data field is filled with pre-forward error correction padding bits; and if a BCC encoding manner is used, tail bits are added;
(c) scrambling (scrambler), where a scrambling operation is performed on data to which pre-forward error correction physical layer padding is added;
(d) encoding (encoder), where a binary convolutional code (binary convolutional code, BCC) or a low-density parity-check code (low density parity check code, LDPC) is used for encoding; and LDPC encoding is used as an example in FIG. 9;
(e) post-forward error correction physical layer (Post-FEC PHY Padding) padding: a post-forward padding bit is added and a packet extension field is added;
(f) stream parsing (stream parser), where an output of an encoder is divided into a plurality of blocks that correspond to a plurality of streams;
(g) segment parsing, where each stream is divided into one or more frequency domain sub-blocks, a number of frequency domain sub-blocks is related to the size of the RU or the MRU, and it should be noted that if the size of the RU or the MRU is greater than 996 subcarriers, segment parsing is performed;
(h) BCC interleaver, where if BCC encoding is used, the stream passes through the BCC interleaver, or if an LDPC encoder is used, the stream does not pass through this module; and LDPC coding is used as an example in FIG. 9, and therefore, the transmitter module shown in FIG. 9 does not include the BCC interleaver;
(i) constellation mapper (constellation mapper), where bitstreams are mapped to a plurality of constellation points;
(j) LDPC tone mapper (LDPC tone mapper), where if LDPC encoding is used, the LDPC tone mapper is used, or if BCC encoding is used, the LDPC tone mapper is skipped;
(k) segment deparser, which may be understood as an inverse process of a segment parser;
(l) frequency domain duplication, where if an extremely high throughput modulation and coding scheme (modulation and coding scheme, MSC)-14 (EHT-MCS 14) is used, a frequency domain duplication is performed;
(m) pilot insertion, where a pilot subcarrier is inserted; and
(n) cyclic shift diversity (cyclic shift diversity, CSD), where a cyclic shift operation (CSD per SS) is performed on each spatial stream (spatial stream, SS).

After the foregoing steps (a) to (n) are performed on data respectively corresponding to the plurality of users, the following steps may be performed on the data of all the users:
(o) spatial mapping (spatial mapping), where a matrix Q is used;
(p) performing an inverse discrete Fourier transform (inverse discrete Fourier transform, IDFT) operation;
(q) inserting a guard interval (guard interval, GI) and a window (insert GI and window); and
(r) performing analog and radio frequency (analog and radio frequency, analog and RF) operations.

It should be noted that the frequency mapping (frequency mapping) module shown in FIG. 9 is configured to include the constellation points on the L data subcarriers.

In a possible implementation, the PPDU includes at least one PSDU, and the at least one PSDU one-to-one corresponds to the at least one subunit. Further, the first device maps bits corresponding to each PSDU to data subcarriers in a subunit corresponding to the PSDU. It should be noted that the data information includes data information corresponding to the at least one PSDU.

It may be understood that, because the subunit is an RU or an MRU, or a number of data subcarriers included in the subunit is the same as a number of data subcarriers included in the RU or the MRU, when the at least one PSDU one-to-one corresponds to the at least one subunit, the first device may reuse the existing RU or MRU generation module to map data bits included in the PSDU to the data subcarriers in the subunit corresponding to the PSDU.

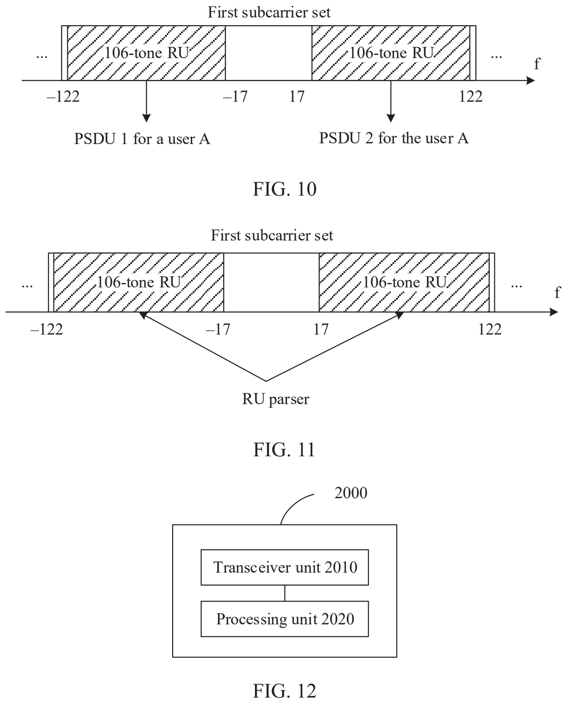

As shown in FIG. 10, the first subcarrier set includes two 106-tone RUs. In this case, the PPDU includes two PSDUs (namely, a PSDU 1 and a PSDU 2 shown in the figure), and both the PSDU 1 and the PSDU 2 are PSDUs sent to a same user (namely, the user (user) A). The first device may reuse an RU generation module corresponding to the 106-tone RU to map bits corresponding to the PSDU 1 to 102 data subcarriers in a 1^{st} 106-tone RU, and reuse an RU generation module corresponding to the 106-tone RU to map bits corresponding to the PSDU 2 to 102 data subcarriers in a 2^{nd} 106-tone RU.

It should be noted that the first device may perform steps (a) to (n) for each PSDU, to generate, based on the PSDU, constellation points carried on data subcarriers in an RU corresponding to the PSDU, and map the generated constellation points to the data subcarriers in the RU. Further, the first device may perform steps (o) to (r) for each PSDU, or perform steps (o) to (r) for at least one PSDU.

In a possible implementation, the first device allocates the X bits corresponding to the data information to the at least one subunit, and allocates different bits in the X bits to different subunits in the at least one subunit. Further, the first device maps, to a data subcarrier in each subunit, a bit allocated to the subunit. The X bits corresponding to the data information may be bits before encoding or bits after encoding. This is not limited in this application.

For example, the first device allocates the X bits to the at least one subunit via an RU parser (parser). The RU parser may also be referred to as a bit parser, an enhanced allocation parser, or the like. This is not limited in embodiments of this application. The RU parser may exist in various locations of a module of the first device. For example, the RU parser may be before a stream parser included in the first device, or may be after a stream parser. It should be noted that, if the RU parser is after the constellation mapper, that the first device allocates the X bits to the at least one subunit may be understood as that the first device allocates, to the at least one subunit via the RU parser, the L constellation points generated based on the X bits. A number of constellation points allocated by the first device to each subunit is equal to a number of data subcarriers included in the subunit.

It may be understood that, because the subunit is the RU or the MRU, or the number of data subcarriers included in the subunit is the same as the number of data subcarriers included in the RU or the MRU, after allocating the X bits to the at least one subunit, the first device may reuse the existing RU or MRU generation module to map, to the data subcarriers in the subunit, bits allocated to the subunit.

As shown in FIG. 11, the first subcarrier set includes two 106-tone RUs. In this case, the first device may allocate some bits in the X bits (for example, X1 bits in the X bits) to a 1^{st} 106-tone RU, and then allocate remaining bits in the X bits (for example, X2 bits in the X bits) to a 2^{nd} 106-tone RU, where X1 and X2 are positive integers. X1+X2=X. Further, the first device may reuse an existing RU generation module corresponding to the 106-tone RU to map the X1 bits to data subcarriers in the 1^{st} 106-tone RU, and reuse the existing RU generation module corresponding to the 106-tone RU to map the X2 bits to data subcarriers in the 2^{nd} 106-tone RU.

For example, that the first device allocates the X bits to the at least one subunit includes: The first device allocates the X bits to the at least one subunit through N rounds of allocation processes. In an n^{th} round of allocation process, the first device first allocates at least one bit in the X bits to a subunit ranked ahead in the at least one subunit in a predefined subunit sequence, and then allocates at least one bit in the X bits to a subunit ranked behind in the at least one subunit in the predefined subunit sequence. N is a positive integer, and n=1, 2, ..., or N.

Optionally, if N>1, in different rounds of allocation processes in the N rounds of allocation processes, numbers of bits allocated by the first device to a same subunit are the same or different.

The predefined subunit sequence is any one of the following: a descending order of numbers of subcarriers included in subunits, an ascending order of numbers of subcarriers included in subunits, a descending order of frequencies of subunits, or an ascending order of frequencies of subunits.

The following uses an example in which the at least one subunit includes two subunits to describe a manner in which the first device allocates the X bits to the two subunits. It is assumed that a 1^{st} subunit corresponds to X1 bits, a 2^{nd} subunit corresponds to X2 bits, and the predefined order is the descending order of the numbers of subcarriers included in the subunits. A number of subcarriers included in the 1^{st} subunit is greater than a number of subcarriers included in the 2^{nd} subunit.

If N=1, the first device allocates the first X1 bits in the X bits to the 1^{st} subunit, and allocates remaining bits (namely, the last X2 bits) in the X bits to the 2^{nd} subunit.

IfN> 1, for example, N=3, in a first allocation process, the first device allocates the first y1 bits in the X bits to the 1^{st} subunit, and allocates z1 bits following the y1 bits in the X bits to the 2^{nd} subunit; in a second round of allocation process, the first device allocates y2 bits following the z1 bits in the X bits to the 1^{st} subunit, and allocates z2 bits following the y2 bits in the X bits to the 2^{nd} subunit; and in a third round of allocation process, the first device allocates y3 bits following the z2 bits in the X bits to the 1^{st} subunit, and allocates z3 bits following the y3 bits in the X bits to the 2^{nd} subunit. y1, y2, y3, z1, z2, and z3 are all positive integers, y1+y2+y3=X1, and z1+z2+z3=X2. Any two of y1, y2, and y3 are the same or different, and any two of z1, z2, and z3 are the same or different.

As described above, compared with an RU or an MRU defined in an existing protocol, the first subcarrier set and/or the bandwidth corresponding to the PPDU may include more pilot subcarriers. In this case, a number of pilot subcarriers included in the first subcarrier set and/or the bandwidth corresponding to the PPDU is different from a number of pilot subcarriers in the RU or the MRU defined in the existing protocol. For example, the number of pilot subcarriers included in the first subcarrier set and/or the bandwidth corresponding to the PPDU may be 10, but the number of pilot subcarriers in the RU or the MRU defined in the existing protocol is 2, 4, 8, 16, 32, or the like. Consequently, the first device cannot reuse a pilot sequence corresponding to the RU or the MRU defined in the existing protocol.

To resolve the foregoing problem, this embodiment of this application provides a manner of determining a pilot sequence. It should be noted that a manner in which the first device determines a pilot sequence may be independently performed, or may be performed in combination with another solution described in this application. For example, for any subcarrier set including one or more pilot subcarriers, the first device may determine, in the following manner, a pilot sequence corresponding to the pilot subcarrier included in the subcarrier set. In other words, the following manner of determining the pilot sequence may be independently performed without depending on another solution described in this application. For another example, when the first subcarrier set includes the at least one subunit, the first device may include the data information on the L data subcarriers in the at least one subunit in the following manner, and determine, in the following manner, a pilot sequence corresponding to a pilot subcarrier included in the first subcarrier set and/or the bandwidth corresponding to the PPDU. In other words, the following manner of determining the pilot sequence may be performed in combination with the foregoing manner of including the data information on the L data subcarriers in the at least one subunit.

The following describes the manner in which the first device determines the pilot sequence corresponding to the pilot subcarrier included in the first subcarrier set or the bandwidth corresponding to the PPDU. That the first device determines the pilot sequence corresponding to the pilot subcarrier included in the first subcarrier set or the bandwidth corresponding to the PPDU may be understood as determining pilot values carried on all pilot subcarriers included in the first subcarrier set or the bandwidth corresponding to the PPDU.

It may be understood that when the first subcarrier set includes only the K first pilot subcarriers, the pilot sequence corresponding to the pilot subcarrier included in the first subcarrier set is the first pilot information described above. When the first subcarrier set includes the K first pilot sequences and the M second pilot subcarriers, the pilot sequence corresponding to the pilot subcarrier included in the first subcarrier set is the first pilot information and the second pilot information described above. When the first subcarrier set includes the K first pilot subcarriers, and the bandwidth corresponding to the PPDU includes T subcarrier sets, the pilot sequence corresponding to the pilot subcarrier included in the bandwidth corresponding to the PPDU is the first pilot information and the third pilot information described above. When the first subcarrier set includes the K first pilot subcarriers and the M second pilot subcarriers, and the bandwidth corresponding to the PPDU includes T subcarrier sets, the pilot sequence corresponding to the pilot subcarrier included in the bandwidth corresponding to the PPDU is the first pilot information, the second pilot information, and the third pilot information described above.

Before the manner of determining the pilot sequence corresponding to the pilot subcarrier included in the first subcarrier set or the bandwidth corresponding to the PPDU is described, pilot sequences defined for various RUs or MRUs in an existing standard are first described.

In the existing standard, pilot sequences of different sizes are defined for various RUs or MRUs as follows:
A pilot sequence including two pilot values is defined for a 26-tone RU: Ψ0-Ψ1={1, - 1}.

A pilot sequence including four pilot values is defined for a 52-tone RU: Ψ0-P3={1, 1, 1, -1}.

A pilot sequence including four pilot values is defined for a 106-tone RU: Ψ0-P3={1, 1, 1, -1}.

A pilot sequence including eight pilot values is defined for a 242-tone RU: Ψ0-Ψ7={1, 1, 1, -1, -1, 1, 1, 1} or Ψ0- T7=1-1, -1, 1, 1, 1, -1, -1, 1}.

A pilot sequence including 16 pilot values is defined for a 484-tone RU: Ψ0-Ψ15={1, 1, 1, -1, -1, 1, 1, 1, 1, 1, 1, -1, -1, 1, 1, 1}. The pilot sequence including the 16 pilot values is obtained by repeating Ψ0-Ψ7={1, 1, 1, -1, -1, 1, 1, 1} twice.

A pilot sequence including 16 pilot values is defined for a 996-tone RU: Ψ0-Ψ15={1, 1, 1, -1, -1, 1, 1, 1, 1, 1, 1, -1, -1, 1, 1, 1}. The pilot sequence including the 16 pilot values is obtained by repeating Ψ0-Ψ7={1, 1, 1, -1, -1, 1, 1, 1} twice.

A pilot sequence including 32 pilot values is defined for a 2*996-tone RU: Ψ0-Ψ15={1, 1, 1, -1, -1, 1, 1, 1, 1, 1, 1, -1, -1, 1, 1, 1, 1, 1, 1, -1, -1, 1, 1, 1, 1, 1, 1, -1, -1, 1, 1, 1}. The pilot sequence including the 32 pilot values is obtained by repeating Ψ0-Ψ7={1, 1, 1, -1, -1, 1, 1, 1} for four times.

It should be noted that pilot values (or referred to as pilot sequences) corresponding to the foregoing various RUs or MRUs may be understood as initial pilot values, and pilot values may change based on the initial pilot values as a number of OFDM symbols increases. For example, a change manner is as follows: Each time one OFDM symbol is added, an initial pilot sequence is cyclically shifted rightwards once to obtain a pilot sequence corresponding to an RU or an MRU in the symbol. For example, an initial pilot sequence corresponding to an RU or an MRU in a 1^{st} OFDM symbol is {1, 1, 1, -1, -1, 1, 1, 1}, and the initial pilot sequence is circularly shifted leftwards once to obtain a pilot sequence {1, 1, -1, -1, 1, 1, 1, 1} corresponding to an RU or an MRU in a 2^{nd} OFDM symbol.

The following describes the manner in which the first device determines the pilot sequence corresponding to the pilot subcarrier included in the first subcarrier set or the bandwidth corresponding to the PPDU.

In a possible implementation, the pilot sequence corresponding to the pilot subcarrier included in the first subcarrier set or the bandwidth corresponding to the PPDU is obtained by performing a first operation on a pilot sequence corresponding to at least one second RU and/or a pilot sequence corresponding to at least one second MRU. The first subcarrier set or the bandwidth corresponding to the PPDU includes P pilot subcarriers, P>P', and P' is a number of pilot subcarriers included in an RU or an MRU whose subcarrier index range is the same as that of the first subcarrier set. Both P and P' are positive integers.

It should be understood that each of the first RU and the second RU that are mentioned in embodiments of this application may be an RU defined in an existing protocol or standard, or an RU defined in a future protocol or standard. Because the first RU and the second RU may not be a same RU, "first" and "second" are used to distinguish in embodiments of this application. Similarly, each of the first MRU and the second MRU is an MRU defined in an existing protocol or standard, or an MRU defined in a future protocol or standard. Because the first MRU and the second MRU may not be a same MRU, "first" and "second" are used to distinguish in embodiments of this application.

The first operation includes one or more of the following: splicing, bit flipping, cyclic shift, or exclusion.

Splicing is splicing the pilot sequence corresponding to the at least one second RU and/or the pilot sequence corresponding to the at least one second MRU end to end, to obtain one pilot sequence. For example, if the at least one first RU and/or the at least one second MRU include/includes one 26-tone RU and one 106-tone RU, pilot sequences corresponding to the 26-tone RU and the 106-tone RU are spliced together to obtain a pilot sequence {1, -1, 1, 1, 1, -1}.

Bit flipping means that "1" in the pilot sequence corresponding to the second RU or the pilot sequence corresponding to the second MRU is flipped to "-1" and "-1" is flipped to "1". For example, bit flipping is performed on the pilot sequence corresponding to the 26-tone RU to obtain a pilot sequence {-1, 1}.

Cyclic shift includes rightward cyclic shift and leftward cyclic shift. For example, a length of the pilot sequence corresponding to the second RU or the pilot sequence corresponding to the second MRU is R, and the pilot sequence corresponding to the second RU or the pilot sequence corresponding to the second MRU is denoted as *̅s̅*̅ = (*s*₀,*s*₁,*s*₂,...,*s*_{*R*-1}). In this case, a pilot sequence obtained by cyclically shifting the pilot sequence corresponding to the second RU or the pilot sequence corresponding to the second MRU rightwards by k bits may be represented as *s̅'* =(*s_{R-k}*,*s*_{*R*-*k*+1},...,*s*_{*R*-1},*s*₀,*s*₁,...*s*_{*R*-*k*-1}), and a sequence obtained by cyclically shifting the pilot sequence corresponding to the second RU or the pilot sequence corresponding to the second MRU leftwards by k bits may be represented as *̅s̅*̅" = (*sₖ*,*s*_{*k*+1},...,*s*_{*R*-1},*s*₀,*s*₁,...,*s*_{*R-k*-1}), where k is a positive integer, and 1≤k≤R. It should be noted that a length of a pilot sequence obtained by cyclically shifting the pilot sequence corresponding to the second RU or the pilot sequence corresponding to the second MRU is equal to a length of the pilot sequence corresponding to the second RU or the pilot sequence corresponding to the second MRU.

Exclusion means that any k pilot values are excluded from the pilot sequence corresponding to the second RU or the pilot sequence corresponding to the second MRU, to obtain a pilot sequence whose length is less than the length of the pilot sequence corresponding to the second RU or the pilot sequence corresponding to the second MRU. For example, a pilot sequence obtained by excluding the first two pilot values from a pilot sequence corresponding to a 242-tone RU is {1, -1, -1, 1, 1, 1} or {1, 1, 1, -1, -1, 1}.

The following uses an example in which the first subcarrier set or the bandwidth corresponding to the PPDU includes 10 pilot subcarriers to describe the manner of determining the pilot sequence corresponding to the pilot subcarrier included in the first subcarrier set or the bandwidth corresponding to the PPDU.

For example, the at least one second RU and/or the at least one second MRU include/includes two 106-tone RUs and a 26-tone RU. The first operation is splicing pilot sequences corresponding to the two 106-tone RUs and a pilot sequence corresponding to the 26-tone RU. For example, the first device ranks a pilot sequence {1, 1, 1, -1} corresponding to a 1^{st} 106-tone RU ahead, ranks the pilot sequence {1, -1} corresponding to the 26-tone RU in the middle, and ranks a pilot sequence {1, 1, 1, -1} corresponding to a 2^{nd} 106-tone RU behind, to obtain a pilot sequence {1, 1, 1, -1, 1, -1, 1, 1, 1, -1} corresponding to the 10 pilot subcarriers included in the first subcarrier set or the bandwidth corresponding to the PPDU. It should be noted that an order of splicing pilot sequences is not limited in embodiments of this application. For example, the pilot sequence {1, -1} corresponding to the 26-tone RU may be spliced ahead, and the pilot sequence {1, 1, 1, -1} corresponding to the 1^{st} 106-tone RU and the pilot sequence {1, 1, 1, -1} corresponding to the 2^{nd} 106-tone RU may be spliced behind, to obtain the pilot sequence {1, -1, 1, 1, 1, -1, 1, 1, 1, -1} corresponding to the 10 pilot subcarriers included in the first subcarrier set or the bandwidth corresponding to the PPDU.

For another example, the at least one second RU and/or the at least one second MRU include/includes a 242-tone RU and a 26-tone RU. The first operation is splicing a pilot sequence {1, 1, 1, -1, -1, 1, 1, 1} corresponding to the 242-tone RU and a pilot sequence {1, -1} corresponding to the 26-tone RU, to obtain a pilot sequence {1, 1, 1, -1, -1, 1, 1, 1, 1, -1} corresponding to the 10 pilot subcarriers included in the first subcarrier set or the bandwidth corresponding to the PPDU.

For example, the at least one second RU and/or the at least one second MRU include/includes a 484-tone RU or a 996-tone RU. The first operation is excluding six pilot values in a pilot sequence {1, 1, 1, -1, -1, 1, 1, 1, 1, 1, 1, -1, -1, 1, 1, 1} corresponding to the 484-tone RU or the 996-tone RU. For example, if the last six pilot values in the pilot sequence corresponding to the 484-tone RU or the 996-tone RU are excluded, an obtained pilot sequence corresponding to the 10 pilot subcarriers included in the first subcarrier set or the bandwidth corresponding to the PPDU is {1, 1, 1, -1, -1, 1, 1, 1, 1, 1}.

In a possible implementation, the pilot subcarrier included in the first subcarrier set includes only the K first pilot subcarriers in the at least one subunit. In this case, a pilot value carried on a first pilot subcarrier in each of the at least one subunit is a pilot value defined for the subunit in an existing standard or protocol. In other words, a pilot sequence corresponding to the pilot subcarrier included in the first subcarrier set is obtained by splicing pilot sequences corresponding to all of the at least one subunit.

For example, when the first subcarrier set includes two 106-tone RUs, pilot values carried on first pilot subcarriers in the two 106-tone RUs are both Ψ0-Ψ3={1, 1, 1, -1}. Therefore, a pilot sequence corresponding to the pilot subcarrier included in the first subcarrier set is {1, 1, 1, -1, 1, 1, 1, -1}.

For another example, when the first subcarrier set includes two 106-tone RUs and one 26-tone RU, pilot values carried on first pilot subcarriers in the two 106-tone RUs are both Ψ0-Ψ3={1, 1, 1, -1}, and a pilot value carried on a first pilot subcarrier in the 26-tone RU is Ψ0-Ψ1={1, -1}. Therefore, the pilot values respectively corresponding to the two 106-tone RUs and the 26-tone RU are spliced based on locations of the two 106-tone RUs and the 26-tone RU in frequency domain, to obtain a pilot sequence {1, 1, 1, -1, 1, -1, 1, 1, 1, -1} corresponding to the pilot subcarrier included in the first subcarrier set.

In a possible implementation, the pilot subcarrier included in the first subcarrier set includes the K first pilot subcarriers in the at least one unit and the M second pilot subcarriers. In this case, a pilot value carried on a first pilot subcarrier in each of the at least one subunit is a pilot value defined for the subunit in an existing standard or protocol. A pilot value carried on the M second pilot subcarriers is a pilot value in a pilot sequence obtained by performing a first operation on the pilot sequence corresponding to the at least one second RU and/or the pilot sequence corresponding to the at least one second MRU.

For example, when the first subcarrier set includes two 106-tone RUs and includes three second pilot subcarriers, pilot values carried on first pilot subcarriers in the two 106-tone RUs are both Ψ0-Ψ3={1, 1, 1, -1}, and pilot values carried on the three second pilot subcarriers may be pilot values in a pilot sequence #1. The pilot sequence #1 is a pilot sequence obtained by excluding a 1^{st} pilot value in a pilot sequence corresponding to the 106-tone RU, and the pilot sequence #1 is {1, 1, -1}. If the three second pilot subcarriers are between the two 106-tone RUs, the pilot sequence #1 and pilot values carried on the two 106-tone RUs are spliced based on locations of the two 106-tone RUs and the three second pilot subcarriers in frequency domain, to obtain a pilot sequence {1, 1, 1, -1, 1, 1, -1, 1, 1, 1, -1} corresponding to the pilot subcarrier included in the first subcarrier set. The first four pilot values are carried on first pilot subcarriers in a 1^{st} 106-tone RU, the middle three pilot values are carried on the three second pilot subcarriers, and the last four pilot values are carried on first pilot subcarriers in a 2^{nd} 106-tone RU.

In a possible implementation, the pilot subcarrier included in the first subcarrier set includes the K first pilot subcarriers in the at least one unit, and the subcarrier set corresponding to the bandwidth corresponding to the PPDU further includes the T third pilot subcarriers. In this case, a pilot value carried on a first pilot subcarrier in each of the at least one subunit is a pilot value defined for the subunit in an existing standard or protocol. A pilot value carried on the T third pilot subcarriers is a pilot value in a pilot sequence obtained by performing a first operation on the pilot sequence corresponding to the at least one second RU and/or the pilot sequence corresponding to the at least one second MRU.

For example, when the first subcarrier set includes two 106-tone RUs, and the subcarrier set corresponding to the bandwidth corresponding to the PPDU includes three third pilot subcarriers, pilot values carried on first pilot subcarriers in the two 106-tone RUs are both Ψ0-Ψ3= { 1, 1, 1, -1}, and pilot values carried on the three third pilot subcarriers may be pilot values in a pilot sequence #1. If the three second pilot subcarriers are between the two 106-tone RUs, the pilot sequence #1 and pilot values carried on the two 106-tone RUs are spliced based on locations of the two 106-tone RUs and the three third pilot subcarriers in frequency domain, to obtain a pilot sequence {1, 1, 1, -1, 1, 1, -1, 1, 1, 1, -1} corresponding to the pilot subcarrier included in the bandwidth corresponding to the PPDU. The first four pilot values are carried on first pilot subcarriers in a 1^{st} 106-tone RU, the middle three pilot values are carried on the three second pilot subcarriers, and the last four pilot values are carried on first pilot subcarriers in a 2^{nd} 106-tone RU.

In a possible implementation, the pilot subcarrier included in the first subcarrier set includes the K first pilot subcarriers in the at least one unit and the M second pilot subcarriers, and the subcarrier set corresponding to the bandwidth corresponding to the PPDU further includes the T third pilot subcarriers. In this case, a pilot value carried on a first pilot subcarrier in each of the at least one subunit is a pilot value defined for the subunit in an existing standard or protocol. Pilot values carried on the M second pilot subcarriers and the T third pilot subcarriers are pilot values in a pilot sequence obtained by performing a first operation on the pilot sequence corresponding to the at least one second RU and/or the pilot sequence corresponding to the at least one second MRU.

For example, when the first subcarrier set includes two 106-tone RUs and three second pilot subcarriers, and the subcarrier set corresponding to the bandwidth corresponding to the PPDU includes three third pilot subcarriers, pilot values carried on first pilot subcarriers in the two 106-tone RUs are both Ψ0-P3={1, 1, 1, -1}, and pilot values carried on the three second pilot subcarriers and the three third pilot subcarriers may be pilot values in a pilot sequence #2. The pilot sequence #2 is a pilot sequence obtained by splicing pilot sequences corresponding to a 106-tone RU and a 26-tone RU, and the pilot sequence #2 is {1, 1, 1, -1, 1, -1}. If the three second pilot subcarriers are between the two 106-tone RUs, and the three third pilot subcarriers are before the two 106-tone RUs, the pilot sequence #2 and pilot values carried on the two 106-tone RUs are spliced based on locations of the two 106-tone RUs, the three second pilot subcarriers, and the three third pilot subcarriers in frequency domain, to obtain a pilot sequence {-1, 1, -1, 1, 1, 1, -1, 1, 1, 1, 1, 1, 1, -1} corresponding to the pilot subcarrier included in the bandwidth corresponding to the PPDU. The first three pilot values are the last three pilot values in the pilot sequence #2, and are carried on the three third pilot subcarriers. A 4^{th} pilot value to a 7^{th} pilot value are carried on first pilot subcarriers in a 1^{st} 106-tone RU. An 8^{th} pilot value to a 10^{th} pilot value are the first three pilot values in the pilot sequence #2, and are carried on the three second pilot subcarriers. The last four pilot values are carried on first pilot subcarriers in a 2^{nd} 106-tone RU.

It should be understood that, even if the subcarrier index range corresponding to the first subcarrier set is the same as a subcarrier index range corresponding to an RU or an MRU, compared with an RU or an MRU defined in an existing protocol, the first subcarrier set further includes the at least one subunit. Therefore, the first subcarrier set is different from the RU or the MRU defined in the existing protocol. In this case, the first device may not reuse an existing signaling field to indicate the first subcarrier set and indicate the at least one subunit included in the first subcarrier set.

To resolve the foregoing problem, this embodiment of this application further provides a manner of indicating the first subcarrier set and indicating the at least one unit included in the first subcarrier set based on a signaling field in the PPDU.

The following describes the manner of indicating the first subcarrier set and indicating the at least one unit included in the first subcarrier set based on the signaling field included in the PPDU. In a possible implementation, the PPDU further includes first indication information, and the first indication information indicates whether the first subcarrier set includes the at least one subunit.

For example, the at least one subunit included in the first subcarrier set has only one possible form. For example, when the subcarrier index range corresponding to the first subcarrier set is the same as a subcarrier index range corresponding to a 242-tone RU, the at least one subunit included in the first subcarrier set may be only two 106-tone RUs. In this case, the first indication information may be 1-bit (bit) information. If the first indication information is set to "0", it indicates that the first subcarrier set includes the at least one subunit. If the first indication information is set to "1", it indicates that the first subcarrier set does not include the at least one subunit. Alternatively, if the first indication information is set to "1", it indicates that the first subcarrier set includes the at least one subunit. If the first indication information is set to "0", it indicates that the first subcarrier set does not include the at least one subunit. It should be noted that if the first subcarrier set does not include the at least one subunit, it indicates that the first subcarrier set is an RU or an MRU. For example, when the subcarrier index range corresponding to the first subcarrier set is the same as the subcarrier index range corresponding to the 242-tone RU, the first subcarrier set is a 242-tone RU when the first subcarrier set does not include the at least one subunit.

For another example, the at least one subunit included in the first subcarrier set has a plurality of possible forms. For example, when the subcarrier index range corresponding to the first subcarrier set is the same as a subcarrier index range corresponding to a 242-tone RU, the at least one subunit included in the first subcarrier set may be one of the following: two 106-tone RUs, two 106-tone RUs and one 26-tone RU, or four 52-tone RUs and one 26-tone RU. In this case, the first indication information may be J-bit information, where J is an integer greater than 1. For example, the subcarrier index range corresponding to the first subcarrier set is the same as the subcarrier range corresponding to the 242-tone RU. The first indication information may be 2-bit information. If the first indication information is set to "00", it indicates that the first subcarrier set does not include the at least one subunit. If the first indication information is set to "01", it indicates that the first subcarrier set includes two 106-tone RUs. If the first indication information is set to "10", it indicates that the first subcarrier set includes two 106-tone RUs and one 26-tone RU. If the first indication information is set to "11", it indicates that the first subcarrier set includes four 52-tone RUs and one 26-tone RU.

A field carrying the first indication information is not limited in embodiments of this application.

For example, the first indication information may be carried in a common field (for example, a common field) or a field for user differentiation (for example, a user field).

For another example, the first indication information may be carried in an RU allocation subfield (RU allocation subfield). To be specific, whether the first subcarrier set includes the at least one subunit is indicated by defining a new value of the RU allocation subfield. Further, the at least one subunit included in the first subcarrier set may be indicated by defining a new value of the RU allocation subfield.

It should be noted that, if the first indication information is not carried in the RU allocation subfield, the RU allocation subfield indicates the first subcarrier set. A manner in which the RU allocation subfield indicates the first subcarrier set is the same as a manner defined in an existing protocol or standard. That the RU allocation subfield indicates the first subcarrier set is equivalent to indicating an RU or an MRU whose subcarrier index range is the same as that of the first subcarrier set.

In a possible implementation, the PPDU further includes second indication information, and the second indication information is used to determine the at least one subunit included in the first subcarrier set.

For example, the at least one subunit included in the first subcarrier set has a plurality of possible forms. For example, when the subcarrier index range corresponding to the first subcarrier set is the same as a subcarrier index range corresponding to a 242-tone RU, the at least one subunit included in the first subcarrier set may be one of the following: two 106-tone RUs, two 106-tone RUs and one 26-tone RU, or four 52-tone RUs and one 26-tone RU. In this case, the PPDU may further include second indication information, and the second indication information may be G-bit information, where G is a positive integer. For example, the subcarrier index range corresponding to the first subcarrier set is the same as the subcarrier range corresponding to the 242-tone RU. The second indication information may be 2-bit information. If the second indication information is set to "00", it indicates that the first subcarrier set includes two 106-tone RUs. If the second indication information is set to "01", it indicates that the first subcarrier set includes two 106-tone RUs and one 26-tone RU. If the second indication information is set to "10", it indicates that the first subcarrier set includes four 52-tone RUs and one 26-tone RU.

In a possible implementation, if it is defined by default or in a protocol or a standard that the first subcarrier set definitely includes the at least one subunit, and the at least one subunit included in the first subcarrier set has only one possible form, the PPDU may not include the first indication information and/or the second indication information. For example, if the bandwidth corresponding to the PPDU is 20 MHz, the subcarrier index range corresponding to the first subcarrier set is the same as a subcarrier index range corresponding to a 242-tone RU in the 20 MHz bandwidth, and it is defined by default or in a protocol or a standard that the at least one subunit included in the first subcarrier set is two 106-tone RUs, the PPDU may not include the first indication information and/or the second indication information. Similarly, if the subcarrier index range corresponding to the first subcarrier set is the same as a subcarrier index range corresponding to a 484-tone RU in a 40 MHz bandwidth (or a 996-tone RU in an 80 MHz bandwidth, or a 2*996-tone RU in a 160 MHz bandwidth, or a 4*996-tone RU corresponding to a 320 MHz bandwidth), and it is defined by default or in a protocol or a standard that the at least one subunit included in the first subcarrier set has only one possible form, the PPDU may not include the first indication information and/or the second indication information.

S620: The first device sends the PPDU.

Correspondingly, the second device receives the PPDU from the first device.

S630: The second device parses the PPDU.

The second device parses the PPDU to obtain the data information included in the PPDU. The first information includes the data information and the pilot information.

In a possible implementation, if the first device maps, via the general bit-to-constellation point generation module, the X bits corresponding to the data information to the L data subcarriers in the at least one unit, the second device may obtain, from the L data subcarriers in the at least one unit, the X bits corresponding to the data information.

In a possible implementation, if the PPDU includes at least one PSDU, the second device may obtain one PSDU from a data subcarrier in each of the at least one subunit, to obtain the at least one PSDU. Further, the second device may obtain, based on the at least one PSDU, the X bits corresponding to the data information.

In a possible implementation, if the first device allocates the X bits corresponding to the data information to the at least one subunit, the second device may obtain, from a data subcarrier in each of the at least one subunit, a bit corresponding to the subunit, and then combine a bit corresponding to the at least one subunit into the X bits corresponding to the data information.

For example, that the first device combines the bit of the at least one subunit into the X bits includes: The second device combines the bit corresponding to the at least one subunit into the X bits through N rounds of ranking processes. In an n^{th} round of ranking process, the second device first extracts, in a predefined order, at least one bit from a bit corresponding to a subunit ranked ahead in the at least one subunit to rank the at least one bit ahead; and then extracts at least one bit from a bit corresponding to a subunit ranked behind in the at least one subunit to rank the at least one bit behind.

Optionally, if N>1, in different rounds of ranking processes in the N rounds of ranking processes, numbers of bits extracted by the second device from bits corresponding to a same subunit are the same or different.

The following uses an example in which the at least one subunit includes two subunits to describe the manner in which the second device combines the bit corresponding to the at least one subunit into the X bits. It is assumed that a 1^{st} subunit corresponds to X1 bits, a 2^{nd} subunit corresponds to X2 bits, and the predefined order is the descending order of the numbers of subcarriers included in the subunits. A number of subcarriers included in the 1^{st} subunit is greater than a number of subcarriers included in the 2^{nd} subunit.

If N=1, the second device obtains, from a data subcarrier in the 1^{st} subunit, the X1 bits corresponding to the 1^{st} subunit, obtains, from a data subcarrier in the 2^{nd} subunit, the X2 bits corresponding to the 2^{nd} subunit, then ranks the X1 bits ahead as the first X1 bits in the X bits, and ranks the X2 bits behind the X1 bits, to obtain the X bits corresponding to the data information.

If N>1, for example, N=3, the second device obtains, from a data subcarrier in the 1^{st} subunit, the X1 bits corresponding to the 1^{st} subunit, and obtains, from a data subcarrier in the 2^{nd} subunit, the X2 bits corresponding to the 2^{nd} subunit; then, in a first round of ranking process, the second device ranks the first y1 bits in the X1 bits ahead as the first y1 bits in the X bits, and ranks the first z1 bits in the X2 bits behind the y1 bits; in a second round of ranking process, the second device ranks y2 bits after the y1 bits in the X1 bits behind the z1 bits, and ranks z2 bits after the z1 bits in the X2 bits behind the y2 bits; and in a third round of ranking process, the second device ranks the last y3 bits in the X1 bits behind the z2 bits, and ranks the last z3 bits in the X2 bits behind the y3 bits. y1, y2, y3, z1, z2, and z3 are all positive integers, y1+y2+y3=X1, and z1+z2+z3=X2. Any two of y1, y2, and y3 are the same or different, and any two of z1, z2, and z3 are the same or different.

It should be understood that after receiving the PPDU, the second device may not only parse the data information from the PPDU, but also estimate the carrier frequency offset and/or the phase noise based on a pilot value carried on a pilot subcarrier included in the first subcarrier set or the bandwidth corresponding to the PPDU. For a manner in which the second device determines the pilot value carried on the pilot subcarrier included in the first subcarrier set or the bandwidth corresponding to the PPDU, refer to the manner in which the first device determines the pilot value carried on the pilot subcarrier included in the first subcarrier set or the bandwidth corresponding to the PPDU in S610.

It should be understood that after the second device receives the PPDU and before obtaining, from the PPDU, the X bits corresponding to the data information, the second device may further determine, based on the signaling field in the PPDU, the first subcarrier set carrying the first information, and the at least one unit included in the first subcarrier set.

In a possible implementation, the PPDU further includes the first indication information, and the second device may determine, based on the first indication information, whether the first subcarrier set includes the at least one subunit. Optionally, the second device may further determine the at least one subunit based on the first indication information.

For example, if the first indication information is set to "0", the second device determines, based on the first indication information, that the first subcarrier set includes the at least one unit; or if the first indication information is set to "1", the second device determines, based on the first indication information, that the first subcarrier set includes the at least one unit. If the at least one unit included in the first subcarrier set has only one possible form, the second device may determine the at least one unit when determining that the first subcarrier set includes the at least one unit.

It should be noted that, if the first indication information is not carried in the RU allocation subfield, the second device may determine the first subcarrier set based on the RU allocation subfield.

In a possible implementation, the PPDU further includes the second indication information, and the second device may determine the at least one subunit based on the second indication information. It may be understood that when the PPDU includes the second indication information, the second device may determine that the first subcarrier set includes the at least one subunit. Further, the second device may determine the at least one subunit based on different values of the second indication information.

In a possible implementation, if it is defined by default or in a protocol or a standard that the first subcarrier set definitely includes the at least one subunit, and the at least one subunit included in the first subcarrier set has only one possible form, when the second device determines the first subcarrier set based on the PPDU, the second device may determine the at least one unit included in the first subcarrier set. For example, the second device may determine the first subcarrier set based on the RU allocation subfield included in the PPDU.

In this embodiment of this application, the first subcarrier set may include the at least one subunit. This helps increase the number of pilot subcarriers included in the first subcarrier set, helps improve the accuracy of estimating the carrier frequency offset and/or the phase noise by the receiving device based on the pilot value carried on the pilot subcarrier included in the first subcarrier set, and further helps reduce the impact of the carrier frequency offset and/or the phase noise on the communication quality. For example, each of the at least one subunit includes a specific number of pilot subcarriers, so that the first subcarrier set includes more pilot subcarriers based on pilot subcarriers included in the at least one subunit. For example, when the first subcarrier set includes 242 subcarriers, and the first subcarrier set includes at least one subunit including two 106-tone RUs and one 26-tone RU, the at least one subunit may provide 10 pilot subcarriers. In this way, the number of pilot subcarriers included in the first subcarrier set is greater than a number of pilot subcarriers included in a 242-tone RU.

In addition, if a number of subcarriers included in the at least one subunit is less than a number of subcarriers included in the first subcarrier set, at least one subcarrier other than a subcarrier included in the at least one subunit in subcarriers included in the first subcarrier set may be used as a pilot subcarrier, to further increase the number of pilot subcarriers included in the first subcarrier set.

It should be understood that, in the foregoing method embodiments, methods and operations implemented by a device (for example, the first device and the second device) may alternatively be implemented by a component (for example, a chip or a circuit) of the device.

It may be further understood that to implement the foregoing functions, the first device and the second device include corresponding hardware structures and/or software modules for performing the functions.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that this implementation goes beyond the scope of this application.

Apparatuses provided in embodiments of this application are described in detail below with reference to FIG. 12 to FIG. 14. It should be understood that descriptions of apparatus embodiments correspond to the descriptions of the method embodiment. Therefore, for content that is not described in detail, refer to the foregoing method embodiment. For brevity, some content is not described again.

In embodiments of this application, the first device or the second device may be divided into functional modules based on the foregoing method embodiment. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, division into the modules is an example, and is merely logic function division. In actual implementation, there may be another division manner. Descriptions are provided below by using an example in which each functional module is obtained through division based on each corresponding function.

FIG. 12 is a block diagram of a communication apparatus according to an embodiment of this application. As shown in FIG. 12, the communication apparatus 2000 may include a transceiver unit 2010 and a processing unit 2020. The transceiver unit 2010 may communicate with the outside, and the processing unit 2020 is configured to process data. The transceiver unit 2010 may also be referred to as a communication interface or a communication unit.

Optionally, the communication apparatus 2000 may further include a storage unit. The storage unit may be configured to store instructions and/or data. The processing unit 2020 may read the instructions and/or the data in the storage unit, so that the communication apparatus implements the foregoing method embodiment.

In a first design, the communication apparatus 2000 may be the first device in the foregoing embodiments, or may be a component (for example, a chip) of the first device. The communication apparatus 2000 may implement steps or procedures performed by the first device in the foregoing method embodiment. The transceiver unit 2010 may be configured to perform operations related to sending and receiving of the first device in the foregoing method embodiment. The processing unit 2020 may be configured to perform operations related to processing of the first device in the foregoing method embodiment.

In a possible implementation, the processing unit 2020 is configured to generate a PPDU. The PPDU includes first information carried in a first subcarrier set. The first information includes data information and pilot information. The first subcarrier set includes at least one first RU and/or at least one first MRU. The data information is carried on a data subcarrier corresponding to the at least one first RU and/or a data subcarrier corresponding to at least one MRU. The pilot information includes first pilot information carried on a first pilot subcarrier corresponding to the at least one first RU and/or a first pilot subcarrier corresponding to the at least one MRU. The transceiver unit 2010 is configured to send the PPDU.

In a second design, the communication apparatus 2000 may be the second device in the foregoing embodiments, or may be a component (for example, a chip) of the second device. The communication apparatus 2000 may implement steps or procedures performed by the second device in the foregoing method embodiment. The transceiver unit 2010 may be configured to perform operations related to sending and receiving of the second device in the foregoing method embodiment. The processing unit 2020 may be configured to perform operations related to processing of the second device in the foregoing method embodiment.

In a possible implementation, the transceiver unit 2010 is configured to receive a PPDU. The PPDU includes first information carried in a first subcarrier set. The first information includes data information and pilot information. The first subcarrier set includes at least one first RU and/or at least one first MRU. The data information is carried on a data subcarrier corresponding to the at least one first RU and/or a data subcarrier corresponding to the at least one first MRU. The pilot information includes first pilot information carried on a first pilot subcarrier corresponding to the at least one first RU and/or a first pilot subcarrier corresponding to the at least one first MRU. The processing unit 2020 is configured to parse the PPDU.

It should be understood that a specific process in which the units perform the foregoing corresponding steps is described in detail in the foregoing method embodiments. For brevity, details are not described herein.

It should be further understood that the communication apparatus 2000 herein is presented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the communication apparatus 2000 may be specifically the first device in the foregoing embodiments, and may be configured to perform procedures and/or steps corresponding to the first device in the foregoing method embodiments. Alternatively, the communication apparatus 2000 may be specifically the second device in the foregoing embodiments, and may be configured to perform procedures and/or steps corresponding to the second device in the foregoing method embodiments. To avoid repetition, details are not described herein again. The transceiver unit 2010 may alternatively be a transceiver circuit (for example, may include a receiver circuit and a transmitter circuit), and the processing unit 2020 may be a processing circuit.

The communication apparatus 2000 in FIG. 12 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

The communication apparatus 2000 in the foregoing solutions has a function of implementing corresponding steps performed by the first device or the second device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform receiving and sending operations and a related processing operation in the method embodiments.

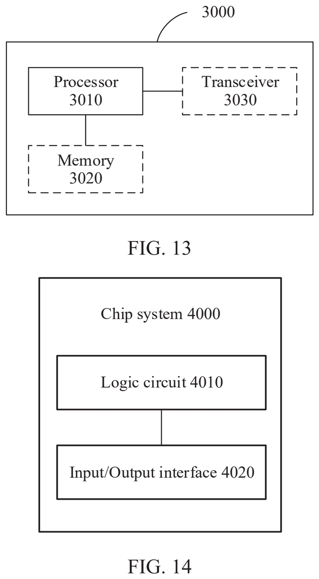

FIG. 13 is a diagram of a communication apparatus 3000 according to an embodiment of this application. The communication apparatus 3000 includes a processor 3010. The processor 3010 is configured to execute a computer program or instructions stored in a memory 3020, or read data/signaling stored in the memory 3020, to perform the methods in the foregoing method embodiments. Optionally, there are one or more processors 3010.

Optionally, as shown in FIG. 13, the communication apparatus 3000 further includes the memory 3020, and the memory 3020 is configured to store the computer program or the instructions and/or the data. The memory 3020 may be integrated with the processor 3010, or may be disposed separately. Optionally, there are one or more memories 3020.

Optionally, as shown in FIG. 13, the communication apparatus 3000 further includes a transceiver 3030. The transceiver 3030 is configured to receive and/or send a signal. For example, the processor 3010 is configured to control the transceiver 3030 to receive the signal and/or send a signal.

In a solution, the communication apparatus 3000 is configured to implement operations performed by the first device in the foregoing method embodiments.

For example, the processor 3010 is configured to execute the computer program or instructions stored in the memory 3020, to implement related operations of the first device in the foregoing method embodiments, for example, the method performed by the first device in the embodiment shown in FIG. 6.

In another solution, the communication apparatus 3000 is configured to implement operations performed by the second device in the foregoing method embodiments.

For example, the processor 3010 is configured to execute the computer program or instructions stored in the memory 3020, to implement related operations of the second device in the foregoing method embodiments, for example, the method performed by the second device in the embodiment shown in FIG. 6.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described in this specification is intended to include but is not limited to these memories and any memory of another proper type.

FIG. 14 is a diagram of a chip system 4000 according to an embodiment of this application. The chip system 4000 (or may be referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement methods and functions in embodiments of this application. The input/output interface 4020 may be an input/output circuit in the chip system 4000, and output information processed by the chip system 4000, or input to-be-processed data or signaling information into the chip system 4000 for processing.

Specifically, for example, if the chip system 4000 is installed on a first device, the logic circuit 4010 is coupled to the input/output interface 4020, the logic circuit 4010 may send a PPDU through the input/output interface 4020, and the PPDU may be generated by the logic circuit 4010. For another example, if the chip system 4000 is installed on a second device, the logic circuit 4010 is coupled to the input/output interface 4020, the logic circuit 4010 may receive a PPDU through the input/output interface 4020, and the logic circuit 4010 parses the PPDU.

In a solution, the chip system 4000 is configured to implement operations performed by the first device in the foregoing method embodiments.

For example, the logic circuit 4010 is configured to implement processing-related operations performed by the first device in the foregoing method embodiments, for example, processing-related operations performed by the first device in the embodiment shown in FIG. 6. The input/output interface 4020 is configured to implement sending and/or receiving-related operations performed by the first device in the foregoing method embodiments, for example, sending and/or receiving-related operations performed by the first device in the embodiment shown in FIG. 6.

In another solution, the chip system 4000 is configured to implement operations performed by the second device in the foregoing method embodiments.

For example, the logic circuit 4010 is configured to implement processing-related operations performed by the second device in the foregoing method embodiments, for example, processing-related operations performed by the second device in the embodiment shown in FIG. 6. The input/output interface 4020 is configured to implement sending and/or receiving-related operations performed by the second device in the foregoing method embodiments, for example, sending and/or receiving-related operations performed by the second device in the embodiment shown in FIG. 6.

An embodiment of this application further provides a computer-readable storage medium. The computer-readable storage medium stores computer instructions for implementing the methods performed by the device in the foregoing method embodiments.

For example, when a computer program is executed by a computer, the computer is enabled to implement the method performed by the first device in the foregoing method embodiments.

For another example, when a computer program is executed by a computer, the computer is enabled to implement the method performed by the second device in the foregoing method embodiments.

An embodiment of this application further provides a computer program product, including instructions. When the instructions are executed by a computer, the method performed by the device (for example, the first device or the second device) in the foregoing method embodiments is implemented.

An embodiment of this application further provides a communication system, including the foregoing first device and second device.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in another manner. For example, the described apparatus embodiments are merely examples. For example, division into the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

All or some of the foregoing embodiments may be implemented by software, hardware, firmware, or any combination thereof. When the software is used for implementation, all or some of embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like. For example, the usable medium includes but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for transmitting a physical layer protocol data unit, comprising:
generating, by a first device, a physical layer protocol data unit PPDU, wherein the PPDU comprises first information carried in a first subcarrier set, the first information comprises data information and pilot information, the first subcarrier set comprises at least one first resource unit RU and/or at least one first multi-resource unit MRU, the data information is carried on a data subcarrier corresponding to the at least one first RU and/or a data subcarrier corresponding to the at least one first MRU, and the pilot information comprises first pilot information carried on a first pilot subcarrier corresponding to the at least one first RU and/or a first pilot subcarrier corresponding to the at least one first MRU; and
sending, by the first device, the PPDU.

2. The method according to claim 1, wherein an index corresponding to the first pilot subcarrier is {-116, -90, -48, -22, 22, 48, 90, 116} or {-116, -90, -48, -22, -10, 10, 22, 48, 90, 116}.

3. The method according to claim 1 or 2, wherein the first subcarrier set comprises Y subcarriers, and the at least one first RU and/or the at least one first MRU comprise/comprises L data subcarriers and K first pilot subcarriers, wherein Y, L, and K are all positive integers, and Y>L+K.

4. The method according to claim 3, wherein the pilot information further comprises second pilot information carried on M second pilot subcarriers, and the M second pilot subcarriers belong to a subcarrier other than the L data subcarriers and the K first pilot subcarriers in the Y subcarriers, wherein M is a positive integer.

5. The method according to claim 3 or 4, wherein the pilot information further comprises third pilot information carried on T third pilot subcarriers, and the T third pilot subcarriers are in a subcarrier set corresponding to a bandwidth corresponding to the PPDU and are different from the Y subcarriers, wherein T is a positive integer.

6. The method according to any one of claims 1 to 5, wherein a subcarrier index range corresponding to the first subcarrier set is the same as a subcarrier index range corresponding to a 242-tone RU; and
the at least one first RU and/or the at least one first MRU comprise/comprises two 106-tone RUs; or
the at least one first RU and/or the at least one first MRU comprise/comprises two 106-tone RUs and one 26-tone RU; or
the at least one first RU and/or the at least one first MRU comprise/comprises a 106+26-tone MRU and one 106-tone RU.

7. The method according to claim 6, wherein subcarrier index ranges corresponding to the two 106-tone RUs comprised in the at least one first RU and/or the at least one first MRU are [-122: -17] and [17: 122] respectively, and pilot subcarrier indexes corresponding to the two 106-tone RUs comprised in the at least one first RU and/or the at least one first MRU are {-116, -90, -48, -22} and {22, 48, 90, 116} respectively; or
subcarrier index ranges corresponding to the two 106-tone RUs and the 26-tone RU that are comprised in the at least one first RU and/or the at least one first MRU are [-122: -17], [17: 122], and [-16: -4, 4: 16] respectively, and pilot subcarrier indexes corresponding to the two 106-tone RUs and the 26-tone RU that are comprised in the at least one first RU and/or the at least one first MRU are {-116, -90, -48, -22}, {22, 48, 90, 116}, and {-10, 10} respectively, wherein
[a: b] represents index values of subcarriers starting from a, ending at b, and comprising a and b, with an increment of 1.

8. The method according to any one of claims 1 to 7, wherein the method further comprises:
mapping, by the first device via a general bit-to-constellation point generation module, X bits corresponding to the data information to the data subcarrier corresponding to the at least one first RU and/or the data subcarrier corresponding to the at least one first MRU, wherein X is a positive integer.

9. The method according to any one of claims 1 to 7, wherein the PPDU comprises at least one physical layer service data unit PSDU, and the at least one PSDU one-to-one corresponds to the at least one first RU and/or the at least one first MRU.

10. The method according to any one of claims 1 to 7, wherein the method further comprises:
allocating, by the first device, X bits corresponding to the data information to the at least one first RU and/or the at least one first MRU, wherein different bits in the X bits are allocated to different RUs or MRUs in the at least one first RU and/or the at least one first MRU, and X is a positive integer.

11. The method according to claim 10, wherein allocating, by the first device, the X bits corresponding to the data information to the at least one first RU and/or the at least one first MRU comprises:
allocating, by the first device, the X bits to the at least one first RU and/or the at least one first MRU in N rounds of allocation processes, wherein in an n^{th} round of allocation process, the first device first allocates, in a predefined order, at least one bit in the X bits to a first RU or a first MRU that is ranked ahead in the at least one first RU and/or the at least one first MRU, and then allocates at least one bit in the X bits to a first RU or a first MRU that is ranked behind in the at least one first RU and/or the at least one first MRU, wherein N is a positive integer, and n=1, 2, ..., or N.

12. The method according to claim 11, wherein N>1, and in different rounds of allocation processes in the N rounds of allocation processes, numbers of bits allocated by the first device to a same first RU or a same first MRU are the same or different.

13. The method according to claim 11 or 12, wherein the predefined order is any one of the following:
a descending order of numbers of subcarriers comprised in the first RU or the first MRU; or
an ascending order of numbers of subcarriers comprised in the first RU or the first MRU; or
a descending order of frequencies of the first RU or the first MRU; or
an ascending order of frequencies of the first RU or the first MRU.

14. The method according to any one of claims 1 to 13, wherein a pilot sequence corresponding to a pilot subcarrier comprised in the first subcarrier set is obtained by performing a first operation on a pilot sequence corresponding to at least one second RU and/or a pilot sequence corresponding to at least one second MRU, and the first operation comprises one or more of the following: splicing, bit flipping, cyclic shift, or exclusion.

15. The method according to any one of claims 5 to 13, wherein a pilot sequence corresponding to a pilot subcarrier comprised in the bandwidth corresponding to the PPDU is obtained by performing a first operation on a pilot sequence corresponding to at least one second RU and/or a pilot sequence corresponding to at least one second MRU, and the first operation comprises one or more of the following: splicing, bit flipping, cyclic shift, or exclusion.

16. The method according to any one of claims 1 to 15, wherein the PPDU further comprises first indication information, and the first indication information is used to determine that the first subcarrier set comprises the at least one first RU and/or the at least one first MRU.

17. The method according to any one of claims 1 to 16, wherein the PPDU further comprises second indication information, and the second indication information is used to determine the at least one first RU and/or the at least one first MRU.

18. A method for transmitting a physical layer protocol data unit, comprising:
receiving, by a second device, a physical layer protocol data unit PPDU from a first device, wherein the PPDU comprises first information carried in a first subcarrier set, the first information comprises data information and pilot information, the first subcarrier set comprises at least one first resource unit RU and/or at least one first multi-resource unit MRU, the data information is carried on a data subcarrier corresponding to the at least one first RU and/or a data subcarrier corresponding to the at least one first MRU, and the pilot information comprises first pilot information carried on a first pilot subcarrier corresponding to the at least one first RU and/or a first pilot subcarrier corresponding to the at least one first MRU; and
parsing, by the second device, the PPDU.

19. The method according to claim 18, wherein an index corresponding to the first pilot subcarrier is {-116, -90, -48, -22, 22, 48, 90, 116} or {-116, -90, -48, -22, -10, 10, 22, 48, 90, 116}.

20. The method according to claim 18 or 19, wherein the first subcarrier set comprises Y subcarriers, and the at least one first RU and/or the at least one first MRU comprise/comprises L data subcarriers and K first pilot subcarriers, wherein Y, L, and K are all positive integers, and Y>L+K.

21. The method according to claim 20, wherein the pilot information further comprises second pilot information carried on M second pilot subcarriers, and the M second pilot subcarriers belong to a subcarrier other than the L data subcarriers and the K first pilot subcarriers in the Y subcarriers, wherein M is a positive integer.

22. The method according to claim 20 or 21, wherein the pilot information further comprises third pilot information carried on T third pilot subcarriers, and the T third pilot subcarriers are in a subcarrier set corresponding to a bandwidth corresponding to the PPDU and are different from the Y subcarriers, wherein T is a positive integer.

23. The method according to any one of claims 18 to 22, wherein a subcarrier index range corresponding to the first subcarrier set is the same as a subcarrier index range corresponding to a 242-tone RU; and
the at least one first RU and/or the at least one first MRU comprise/comprises two 106-tone RUs; or
the at least one first RU and/or the at least one first MRU comprise/comprises two 106-tone RUs and one 26-tone RU; or
the at least one first RU and/or the at least one first MRU comprise/comprises a 106+26-tone MRU and one 106-tone RU.

24. The method according to claim 23, wherein subcarrier index ranges corresponding to the two 106-tone RUs comprised in the at least one first RU and/or the at least one first MRU are [-122: -17] and [17: 122] respectively, and pilot subcarrier indexes corresponding to the two 106-tone RUs comprised in the at least one first RU and/or the at least one first MRU are {-116, -90, -48, -22} and {22, 48, 90, 116} respectively; or
subcarrier index ranges corresponding to the two 106-tone RUs and the 26-tone RU that are comprised in the at least one first RU and/or the at least one first MRU are [-122: -17], [17: 122], and [-16: -4, 4: 16] respectively, and pilot subcarrier indexes corresponding to the two 106-tone RUs and the 26-tone RU that are comprised in the at least one first RU and/or the at least one first MRU are {-116, -90, -48, -22}, {22, 48, 90, 116}, and {-10, 10} respectively, wherein
[a: b] represents index values of subcarriers starting from a, ending at b, and comprising a and b, with an increment of 1.

25. The method according to any one of claims 18 to 24, wherein the PPDU comprises at least one physical layer service data unit PSDU, and the at least one PSDU one-to-one corresponds to the at least one first RU and/or the at least one first MRU.

26. The method according to any one of claims 18 to 24, wherein parsing, by the second device, the PPDU comprises:
combining, by the second device, a bit corresponding to the at least one first RU and/or a bit corresponding to the at least one first MRU into X bits corresponding to the data information, wherein X is a positive integer.

27. The method according to claim 26, wherein combining, by the second device, the bit corresponding to the at least one first RU and/or the bit corresponding to the at least one first MRU into the X bits corresponding to the data information comprises:
combining, by the second device, the bit corresponding to the at least one first RU and/or the bit corresponding to the at least one first MRU into the X bits in N rounds of ranking processes, wherein in an n^{th} round of ranking process, the second device first extracts, in a predefined order, at least one bit from a bit corresponding to a first RU or a first MRU that is ranked ahead in the at least one first RU and/or the at least one first MRU to rank the at least one bit ahead, and then extracts at least one bit from a bit corresponding to a first RU or a first MRU that is ranked behind in the at least one first RU and/or the at least one first MRU to rank the at least one bit behind, wherein N is a positive integer, and n=1, 2, ..., or N.

28. The method according to claim 27, wherein N>1, and in different rounds of ranking processes in the N rounds of ranking processes, numbers of bits extracted by the second device from a bit corresponding to a same first RU or a same first MRU are the same or different.

29. The method according to claim 27 or 28, wherein the predefined order is any one of the following:
a descending order of numbers of subcarriers comprised in the first RU or the first MRU; or
an ascending order of numbers of subcarriers comprised in the first RU or the first MRU; or
a descending order of frequencies of the first RU or the first MRU; or
an ascending order of frequencies of the first RU or the first MRU.

30. The method according to any one of claims 18 to 29, wherein a pilot sequence corresponding to a pilot subcarrier comprised in the first subcarrier set is obtained by performing a first operation on a pilot sequence corresponding to at least one second RU and/or a pilot sequence corresponding to at least one second MRU, and the first operation comprises one or more of the following: splicing, bit flipping, cyclic shift, or exclusion.

31. The method according to any one of claims 22 to 29, wherein a pilot sequence corresponding to a pilot subcarrier comprised in the bandwidth corresponding to the PPDU is obtained by performing a first operation on a pilot sequence corresponding to at least one second RU and/or a pilot sequence corresponding to at least one second MRU, and the first operation comprises one or more of the following: splicing, bit flipping, cyclic shift, or exclusion.

32. The method according to any one of claims 18 to 31, wherein the PPDU further comprises first indication information, and the method further comprises:
determining, by the second device based on the first indication information, that the first subcarrier set comprises the at least one first RU and/or the at least one first MRU.

33. The method according to any one of claims 18 to 32, wherein the PPDU further comprises second indication information, and the method further comprises:
determining, by the second device, the at least one first RU and/or the at least one first MRU based on the second indication information.

34. A communication apparatus, wherein the communication apparatus comprises a unit configured to perform the method according to any one of claims 1 to 17, or comprises a unit configured to perform the method according to any one of claims 18 to 33.

35. A communication apparatus, comprising:
a processor, configured to execute computer instructions stored in a memory, to enable the communication apparatus to perform the method according to any one of claims 1 to 17, or enable the communication apparatus to perform the method according to any one of claims 18 to 33.

36. The communication apparatus according to claim 35, wherein the communication apparatus further comprises the memory.

37. The communication apparatus according to claim 35 or 36, wherein the communication apparatus further comprises a communication interface, and the communication interface is coupled to the processor; and
the communication interface is configured to input and/or output information.

38. A computer-readable storage medium, configured to store a computer program, wherein the computer program comprises instructions for implementing the method according to any one of claims 1 to 17, or comprises instructions for implementing the method according to any one of claims 18 to 33.

39. A computer program product, wherein the computer program product comprises a computer program or instructions for performing the method according to any one of claims 1 to 33.

40. A chip, wherein the chip comprises a processor and an input/output interface, and the processor reads, through the input/output interface, instructions stored in a memory, to the method according to any one of claims 1 to 33.
